(19) Europäisches Patentamt
European Patent Office
Office européen des brevets

(11) **EP 4 458 579 A1**

(12) **EUROPEAN PATENT APPLICATION**
published in accordance with Art. 153(4) EPC

(43) Date of publication:
**06.11.2024 Bulletin 2024/45**

(21) Application number: **22915818.3**

(22) Date of filing: **20.12.2022**

(51) International Patent Classification (IPC):
**B32B 27/32** *(2006.01)*    **B65D 65/40** *(2006.01)*

(52) Cooperative Patent Classification (CPC):
**B32B 27/32; B65D 65/40**

(86) International application number:
**PCT/JP2022/046838**

(87) International publication number:
**WO 2023/127594 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021 JP 2021214643**

(71) Applicant: **Toyobo Co., Ltd.
Kita-ku
Osaka-shi, Osaka 530-0001 (JP)**

(72) Inventors:
• **YAMAZAKI, Atsushi
Inuyama-shi, Aichi 484-8508 (JP)**
• **IWATA, Daisuke
Inuyama-shi, Aichi 484-8508 (JP)**
• **KASHIWA, Mitsuhiro
Inuyama-shi, Aichi 484-8508 (JP)**
• **YAMAGUCHI, Yuya
Osaka-shi, Osaka 530-0001 (JP)**
• **IMAI, Toru
Inuyama-shi, Aichi 484-8508 (JP)**

(74) Representative: **Vossius & Partner
Patentanwälte Rechtsanwälte mbB
Siebertstrasse 3
81675 München (DE)**

(54) **PACKAGING MATERIAL**

(57)    Provided is a packaging material formed with resins of types that have low environmental loads, and having necessary performances such as gas barrier properties, heat sealability, and processability required for packaging materials. A packaging material having at least one base film including a polyolefin-based resin as a main component and a heat sealable resin layer, wherein at least one of the base film delaminated from the packaging material has a heating elongation rate at 130°C, measured with a thermomechanical analyzer, of 6% or less both in the MD and TD direction, and the packaging material has an oxygen permeability of 60 ml/m$^2$·d·MPa or less in an environment of 23°C and 65% RH.

**EP 4 458 579 A1**

**Description**

TECHNICAL FIELD

The present invention relates to a laminated packaging material for use in the field of packaging foods, pharmaceuticals, industrial products, and so on. More specifically, the present invention relates to an environment-responsive laminated packaging material having excellent gas barrier properties, processability, toughness, and convenience.

BACKGROUND ART

In recent years, regulations aimed at reducing the use of throwaway plastics have been tightened in Europe and other countries around the world. Behind this are the growing international awareness of resource recycling and the worsening waste problems in emerging countries. Therefore, environment-responsive products are required from the viewpoints of the 3Rs (recycle, reuse, reduce) for plastic packaging materials used for foods, pharmaceuticals, and so on.

As one of possibilities for making environmentally friendly packaging materials as described above, forming the packaging materials from a single recyclable material, namely, monomaterialization is being actively studied. As a material for monomaterialization, for example, polyester-based, or polyolefin-based materials are being studied individually.

While low-environmental-load packaging materials as described above are being demanded, the characteristics required for the packaging materials themselves are becoming increasingly multifunctional, for convenience. For example, in pouches that include no aluminum foil and can be used in microwave ovens, gas barrier properties, heat resistance, toughness (resistance to bag-breaking and resistance to pinholes), high sealing properties and so on of the bag are simultaneously required in one packaging bag. In order to achieve this, it is necessary to laminate different materials respectively having different functions, and a commonly used configuration is made up of at least three layers including a vapor-deposited polyester film on the outer side of the bag, a polyamide film as an intermediate layer, and a polyolefin-based heat sealable resin that is dry-laminated on the inner side (content side) via an adhesive. Although such a configuration can achieve intended performances, it is inferior in recyclability due to the bonding of different materials, and cannot be said to be an environmentally friendly packaging material as described above.

Considering these points, studies are underway to design ideal packaging materials having multifunctionality as a bag as described above even with the same material that enables monomaterialization.

In designing polyester-based monomaterial packaging materials, a polyester-based sealant having low adsorption and improved heat resistance is disclosed as a substitute for a conventional polyolefin-based sealant (see Patent document 1, for example). In the sealant of Patent document 1, heat sealability and heat resistance are satisfied by separating the layer having heat sealability from other layers and separately controlling the respective raw material compositions of these layers. However, regarding the heat sealability, the polyester-based sealant is inferior in heat sealability to the sealing strength of a polyolefin-based sealant, and at present, the polyester-based sealant is not able to endure to severe treatments such as boiling and retorting treatments.

Meanwhile, in designing polyolefin-based monomaterial packaging materials, a polyolefin-based heat seal resin can be used as a sealant, and this is advantageous in that sufficient heat sealability can be ensured compared with the polyester-based sealant described above. The sealant should have a certain degree of thickness because of the necessity to exhibit sufficient sealability, and the occupancy of sealant in the package is large. This is also a major reason why design of polyolefin-based monomaterial packaging materials is promoted. On the other hand, polyolefin-based packaging materials had a problem that they are inferior in gas barrier performance to conventional packaging having barrier performance. Although polypropylene films have water vapor barrier properties, the value indicating water vapor barrier properties is not sufficient compared to, for example, transparent inorganic vapor-deposited polyester films, which are generally considered to have excellent water vapor barrier properties, and there is also a problem that polypropylene films are very poor in oxygen barrier properties.

In contrast, films in which a polymeric resin composition that is generally said to have relatively high oxygen barrier properties, such as polyvinyl alcohol, ethylene vinyl alcohol copolymer, polyvinylidene chloride resin, or polyacrylonitrile is laminated on a polypropylene film have been used (see, for example, Patent documents 2 to 4). However, since the aforementioned gas barrier coated films produced by using a polymeric resin composition such as polyvinyl alcohol or ethylene vinyl alcohol copolymer have high humidity dependence, deterioration in gas barrier properties is observed under high humidity conditions, and the film does not have wet and heat resistance capable of withstanding sterilization treatments such as boiling and retorting. Although the polyvinylidene chloride resin and polyacrylonitrile have low humidity dependence, there are problems that, for example, the barrier value as an absolute value is insufficient and the risk of generating harmful substances during disposal and incineration is high. Furthermore, the polypropylene film used is not sufficient in heat resistance, and has a problem that expansion and contraction of the film by addition of heat at the time of printing, lamination processing, and a sterilization treatment can cause wrinkles in terms of appearance and deterioration in performance.

With respect to improvement in gas barrier properties of the polypropylene film, an attempt has been made to exhibit a stable gas barrier performance without humidity dependence by laminating an inorganic thin film (for example, Patent document 5). However, there have been problems of, for example, inferiority in absolute value of gas barrier performance (especially, oxygen barrier properties) to a conventional polyester vapor-deposited film, and weakness to physical damage compared with the coated type barrier film as described above. A barrier material subjected to vapor deposition on a polyolefin-based sealant has also been studied (for example, Patent document 6). However, there has been a problem that oxygen barrier property is insufficient although water vapor barrier performance is exhibited.

RELATED ART DOCUMENT

PATENT DOCUMENTS

Patent document 1: Japanese Laid-Open Patent Publication No. 2017-165059
Patent document 2: Japanese Laid-Open Patent Publication No. 2000-52501
Patent document 3: Japanese Laid-Open Patent Publication No. H4-359033
Patent document 4: Japanese Laid-Open Patent Publication No. 2003-231221
Patent document 5: International Publication WO 2017/221781
Patent document 6: Japanese Patent No. 3318479

SUMMARY OF THE INVENTION

PROBLEMS TO BE SOLVED BY THE INVENTION

In the above-mentioned patent documents, it was difficult to balance the monomaterialization of a packaging material and various performances required for the packaging material, and it has been impossible to design a packaging material that is environmentally friendly and convenient.

The present invention was devised against the background of such problems of conventional arts.

That is, it is an object of the present invention to provide a packaging material capable of forming a laminate configuration formed with resins of types that have low environmental loads, and having necessary performances such as gas barrier properties, heat sealability, and processability required for packaging materials.

MEANS FOR SOLVING THE PROBLEMS

The present inventors found that: by making a laminated film in which a predetermined gas barrier layer tailored for required performance is laminated on a base film, the gas barrier performance is greatly improved; by controlling the heating elongation rate of the laminated film, heat resistance against various processing and a sterilization treatment is ensured; and by finally laminating a sealant made of a polyolefin-based component, a packaging material having excellent environmental friendliness and high convenience while maintaining high heat sealability can be provided, and accomplished the present invention.

The present invention is as follows.

1. A packaging material comprising:

at least one base film including a polyolefin-based resin as a main component; and
a heat sealable resin layer, wherein
at least one of the base film is a laminated base film having a gas barrier layer,
at least one of the base film delaminated from the packaging material has a heating elongation rate at 130°C, measured with a thermomechanical analyzer, of 6% or less both in an MD direction and a TD direction, and
the packaging material has an oxygen permeability of 60 ml/m$^2$·d·MPa or less in an environment of 23°C and 65% RH.

2. The packaging material according to 1., wherein the heat sealable resin layer is made of a polyolefin-based resin mainly composed of a polypropylene resin or a polyethylene resin.

3. The packaging material according to 1. or 2., wherein two or more layers of the gas barrier layer are included.

4. The packaging material according to any one of 1. to 3., wherein the gas barrier layer is an inorganic thin film layer including at least one of aluminum, aluminum oxide, silicon oxide, and a composite oxide of silicon oxide and aluminum oxide.

5. The packaging material according to any one of 1. to 4., wherein the gas barrier layer is a coating layer including at least one of a polyvinyl alcohol resin, a polyester resin, and a polyurethane resin.

6. The packaging material according to any one of 1. to 5., wherein an anchor coat layer is laminated between the base film and the gas barrier layer.

7. The packaging material according to any one of 1. to 6., wherein a protective layer is laminated on the gas barrier layer.

8. The packaging material according to any one of 1. to 7., wherein two or more sheets of the base film are included.

9. The packaging material according to any one of 1. to 8., wherein the polyolefin resin constituting the base film contains 1% by weight or more and 25% by weight or less of a plant-derived polyethylene resin.

10. The packaging material according to any one of 1. to 9., used for boiling or retorting.

11. The packaging material according to any one of 1. to 9., used for microwave heating.

12. A packaging bag comprising the packaging material according to any one of 1. to 9.

13. A package of an object to be packed comprising the packaging material according to any one of 1. to 9. or the packaging bag according to 12.

EFFECTS OF THE INVENTION

By such techniques, the present inventors have made it possible to provide a packaging material having necessary performances such as barrier properties, heat sealability, and heat resistance required for packaging materials while giving consideration to the environment.

EMBODIMENTS FOR CARRYING OUT THE INVENTION

The packaging material of the present invention is a package including: at least one base film including a polyolefin-based resin as a main component; and a heat sealable resin layer. At least one of the base film is a laminated film having a gas barrier layer. At least one of the base film delaminated from the package has a heating elongation rate at 130°C of 6% or less both in an MD direction and a TD direction. The packaging material has an oxygen permeability of 60 ml/m$^2$·d·MPa or less in an environment of 23°C and 65% RH. The "main component" mentioned above means 50% by mass or more in terms of composition.

Hereinafter, the present invention will be described in detail.

[Base film including polyolefin-based resin as a main component]

A packaging material of the present invention includes a base film mainly composed of a polyolefin-based resin. The base film is preferably a base film mainly composed of a polypropylene-based resin (hereinafter, referred to as a polypropylene-based resin film), and more preferably a stretched film. The polypropylene-based resin stretched film used as the base film in the present invention is preferably a biaxially stretched film, and the raw material, the mixing ratio, and the like are not particularly limited. The polypropylene-based resin stretched film may be made of, for example, a polypropylene homopolymer (propylene homopolymer), or may be made of a random copolymer or a block copolymer of propylene as a main component with one kind or two or more kinds selected from $\alpha$-olefins such as ethylene, butene, pentene, and hexene, or may be made of a mixture of two or more of these polymers. For the purpose of modifying physical properties, known additives such as an antioxidant, an antistatic agent, and a plasticizer may be added, and for example, petroleum resin or terpene resin may be added.

In the present invention, the polypropylene-based resin that forms the base film is preferably a propylene homopolymer substantially not containing a comonomer other than propylene, and even when a comonomer is contained, the comonomer amount is preferably 0.5 % by mole or less. The upper limit of the comonomer amount is more preferably 0.3 % by mole, and further preferably 0.1 % by mole. Within the above range, crystallinity is improved, change in dimension at high temperatures is reduced, or in other words, an elongation rate when heated to a certain temperature (hereinafter, heating elongation rate) is reduced, and heat resistance is improved. It should be noted that a comonomer may be contained in a trace amount as long as the crystallinity is not significantly deteriorated.

Furthermore, the biaxially stretched polypropylene-based resin film for use in the present invention may be a single layer film, or may be a laminated film. However, a laminated film is preferred so as to achieve the object of the present invention, the type of a laminate, the number of laminated layers, the method of lamination, etc., are not particularly limited, and any known methods can be selected, and it is preferred to improve the lamination strength, and the adhesive strength of a coating agent by controlling the surface roughness and the flexibility of the base film surface.

As the measure for improving the lamination strength of the base film, and interfacial adhesive strength with an inorganic thin film layer, a coating agent, and the like, a mixture of two or more kinds of polypropylene-based resins having different melt flow rates (MFR) may be used as the polypropylene-based resin constituting the surface layer of the base film.

It is inferred that, if the difference among the melt flow rates (MFR) of the two or more kinds of polypropylene-based resins in the polypropylene-based resin mixture is small, the crystallization rate and the degree of crystallinity do not significantly differ among these polypropylene-based resins, and minute recesses and protrusions are easily formed on the surface. However, attention needs to be paid to the following facts. That is, if the cooling speed of an unstretched sheet is low at the time of manufacturing of a film, the extent of surface unevenness due to spherulites becomes large, and an excessively high stretching temperature at the time of stretching in the machine direction or the transverse direction may lead to a large surface unevenness.

As each of the polypropylene-based resins, it is possible to use: a polypropylene homopolymer containing no copolymerization component; or a polypropylene resin obtained by copolymerizing ethylene and/or an α-olefin having four or more carbon atoms in an amount of 5.0 % by mole or less. The amount of the copolymerization component of the polypropylene resin resulting from copolymerization is preferably 4.0 % by mole or less and more preferably 3.5 % by mole or less. Meanwhile, the amount of the copolymerization component of the polypropylene resin resulting from copolymerization is preferably 1.0 % by mole or more, more preferably 1.5 % by mole or more, further preferably 2.0 % by mole or more, and particularly preferably 2.5 % by mole or more.

Examples of the α-olefin having four or more carbon atoms include 1-butene, 1-hexene, 4-methyl-1-pentene, 1-octene, and the like. In addition, as another copolymerization component, maleic acid having polarity, or the like may be used.

From a practical aspect, the lower limit of the xylene soluble content of the polypropylene-based resin that forms the base film is preferably 0.1% by mass. The upper limit of the xylene soluble content is preferably 7% by mass, more preferably 6% by mass, and further preferably 5% by mass. Within the above range, crystallinity is improved, the heating elongation rate is further reduced, and heat resistance is improved.

In the present invention, the lower limit of the melt flow rate (MFR) (230°C, 2.16 kgf) of the polypropylene-based resin is preferably 0.5 g/10 min. The lower limit of the MFR is more preferably 1.0 g/10 min, further preferably 2.0 g/10 min, particularly preferably 4.0 g/10 min, and most preferably 6.0 g/10 min. Within the above range, the mechanical load is small and extrusion and stretching become easier. The upper limit of the MFR is preferably 20 g/10 min. The upper limit of the MFR is more preferably 17 g/10 min, further preferably 16 g/10 min, and particularly preferably 15 g/10 min. Within the above range, stretching becomes easier, thickness unevenness becomes smaller, stretching temperature and heat setting temperature are more likely to be raised, the heating elongation rate becomes smaller, and heat resistance improves.

From the viewpoint of heat resistance, the base film may be a uniaxially stretched film in the machine direction (MD direction) or in the transverse direction (TD direction), but is preferably a biaxially stretched film. In the present invention, by stretching at least uniaxially using the aforementioned preferred raw material, it is possible to obtain a film that has a high degree of heat resistance and has a low heating elongation rate at high temperatures that could not be expected with conventional polypropylene films. Examples of the stretching method include a simultaneous biaxial stretching method and a sequential biaxial stretching method, but the sequential biaxial stretching method is preferred from the viewpoint of improving flatness, dimensional stability, thickness unevenness, etc.

Regarding the sequential biaxial stretching method, the polypropylene-based resin is heated and melted using a single-screw or twin-screw extruder at a resin temperature of 200°C or higher and 280°C or lower, formed into a sheet through a T-die, and then extruded onto a chill roll at a temperature of 10°C or higher and 100°C or lower, to obtain an unstretched sheet. Next, roll stretching can be performed at 3.0 times or more and 8.0 times or less in the machine direction (MD direction) at a temperature of 120°C or higher and 165°C or lower, followed by preheating with a tenter, and then stretching at 4.0 times or more and 20.0 times or less in the transverse direction (TD direction) at a temperature of 155°C or higher and 175°C or lower can be performed. Furthermore, after biaxial stretching, a heat setting treatment can be performed at a temperature of 165°C or higher and 175°C or lower while allowing relaxation by 1% or more and 15% or less.

In the present invention, the heating elongation rate at 130°C of the base film measured with a thermomechanical analyzer is preferably 10% or less both in the MD direction and the TD direction. Thus, it is possible to reduce the deformation of the base due to thermal load in the condition that a tension is applied to the film in the processing step of a gas barrier layer, or a laminate processing step as will be described later. As a result, it is possible to further improve the gas barrier performance and appearance quality such as wrinkles and slack. The heating elongation rate at 130°C in the MD direction and the TD direction is preferably 9.5% or less, more preferably 9.0% or less, and further preferably 8.5% or less, and the lower limit is preferably 0%. If the heating elongation rate at 130°C is outside the above range, the laminated film may deform due to the heat at the time of tension loading to result in deterioration in the gas barrier properties, or the dimension of the film may change to result in deterioration in appearance quality. In the present invention, the heating elongation rate is a value measured by a thermomechanical analyzer (TMA) method, and more specifically, the heating elongation rate is determined according to the method described in Examples.

In order to make the aforementioned heating elongation rate fall within the aforementioned range in the base film of the present invention, it is preferred that the film is formed in the following method.

First, the upper limit of the stretching temperature in the machine direction (MD) is preferably a film melting point (Tm) - 7°C, more preferably Tm -10°C, and further preferably Tm - 12°C. Within the above range, it is easy to reduce the heating elongation rate, and it becomes less likely to fuse on the stretching roll and extend, and hence the product quality is less likely to deteriorate. It is to be noted that stretching in the machine direction may be carried out in multiple stages of two or more stages using three or more pairs of stretching rolls. By dividing into multiple stages, the distortion during stretching can be reduced, and hence the heating elongation rate is easily reduced.

The upper limit of the stretching ratio in the transverse direction (TD) is preferably 15 times, more preferably 12 times, and further preferably 10 times. If the stretching ratio exceeds the above limit, the heating elongation rate becomes high, and rupture is more likely to occur during stretching.

The lower limit of the stretching temperature in TD is preferably 150°C, more preferably 152°C, further preferably 154°C, and particularly preferably 156°C. When the stretching temperature in TD is 150°C or higher, stretching is conducted in a sufficiently softened state, so that it is easy to reduce the heating elongation rate. The upper limit of the TD stretching temperature is preferably 164°C, more preferably 162°C, and further preferably 160°C. The temperature is preferably higher in order to lower the heating elongation rate.

The lower limit of the heat setting temperature after stretching in the transverse direction (TD) is preferably 168°C, more preferably 170°C, and further preferably 173°C. When it is 168°C or higher, the heating elongation rate is less likely to increase, and it is not necessary to conduct a treatment for a long time so as to lower the heating elongation rate.

At the time of heat setting, mitigation (relaxation) is preferably occurred. The lower limit of the relaxation rate is preferably 2% and more preferably 3%. If the relaxation rate is less than the above, the heating elongation rate may become high.

Furthermore, after the film manufactured through the above process is temporarily wound into the shape of a roll, the roll may also be annealed offline in order to decrease the heat shrinkage rate.

The base film for use in the present invention preferably contains particles to form protrusions on the film surface so as to impart handleability (for example, windability after lamination). Examples of the particles to be contained in the film include inorganic particles such as silica, kaolinite, talc, calcium carbonate, zeolite, and alumina, and heat-resistant polymer particles such as acryl, PMMA, nylon, polystyrene, polyester, and benzoguanamine-formalin condensate. From the viewpoint of transparency, the content of the particles in the film is preferably small, and is, for example, preferably 1 ppm or more and 1000 ppm or less. The particles have an average particle diameter of preferably 1.0 to 3.0 $\mu$m and more preferably 1.0 to 2.7 $\mu$m. The average particle diameter mentioned herein is measured through the following method. That is, a photograph is taken with a scanning electron microscope, Feret diameters in the horizontal direction are measured by using an image analyzer device, and the average value of the Feret diameters is indicated as the average particle diameter. Furthermore, from the viewpoint of transparency, it is preferable to select particles having a refractive index similar to that of the resin used. In order to impart various functions to the film as needed, the film may contain an antioxidant, an ultraviolet absorber, an antistatic agent, a pigment, a lubricant, a nucleating agent, an adhesive, an antifogging agent, a flame retardant, an anti-blocking agent, an inorganic or organic filler, etc.

Another resin other than the polypropylene-based resin used in the present invention may be used for the purpose of improving the mechanical properties of the base film, improving the adhesiveness with an ink layer and an adhesive layer to be laminated on the gas barrier coat layer, and reducing the environmental load as long as the object of the present invention is not impaired. Examples of such a resin include polyethylene resins, polypropylene resins different from those mentioned above, random copolymers that are copolymers of propylene and ethylene and/or an $\alpha$-olefin having 4 or more carbon atoms, and various elastomers.

The polyethylene-based resin that can be used in the base film of the present invention is a resin mainly composed of ethylene. For example, any ethylene homopolymers including high pressure-processed low density polyethylene, linear low density polyethylene, medium density polyethylene, and high density polyethylene can be used. In addition, crystalline, low-crystalline, or noncrystalline random or block copolymers with monomers such as $\alpha$-olefins such as propylene, butene-1, pentene-1, hexene-1, 3-methylbutene-1, 4-methylpentene-1, and octene-1, vinyl acetate, (meth)acrylic acid, and (meth)acrylic ester, mixtures thereof, or the like can be used.

It is preferred that the polyethylene-based resin is contained in an amount of 1% by mass or more and 25% by mass or less with respect to the total of 100 of the polypropylene-based resin and the polyethylene-based resin that constitute the base material. When the content of the polyethylene-based resin is 1% by mass or more, heat seal strength, blocking resistance, and anti-fogging property are improved. The content is more preferably 5% by mass or more, and further preferably 8% by mass or more. When the content is 20% by mass or less, it is easy to maintain the rigidity. The content is more preferably 18% by mass or less and further preferably 15% by mass or less.

The melting point of the polyethylene-based resin is preferably 100°C or higher and 135°C or lower, and more preferably in the range of 105°C or higher and 130°C or lower from the viewpoints of heat resistance, transparency, mechanical properties, and film formation. The density is measured in accordance with JIS K7112, and is preferably 0.90 g/cm$^3$ or more and 0.94 g/cm$^3$ or less, and more preferably 0.91 g/cm$^3$ or more and 0.94 g/cm$^3$ or less.

The melt flow rate (MFR) (190°C, 2.16 kgf) is preferably 0.5 g/10 min or more, more preferably 1 g/10 min or more, and further preferably 2 g/10 min or more, and from the viewpoint of further stabilizing the formability, the MFR is preferably 20 g/10 min or less, more preferably 15 g/10 min or less, and further preferably 10 g/10 min or less.

From the viewpoint of low environmental load, it is particularly preferred to use a plant-derived polyethylene-based resin as the polyethylene-based resin of the present invention. Biobased percentage of the polyethylene-based resin measured in accordance with ISO16620 is preferably 50% or more and 100% or less, preferably 70% or more and 100% or less, and further preferably 80% or more and 100% or less.

In the present invention, the thickness of the base film is arbitrarily set according to each application, and the lower limit thereof is preferably 2 μm or more, more preferably 3 μm or more, and further preferably 4 μm or more. On the other hand, the upper limit of the thickness is preferably 300 μm or less, more preferably 250 μm or less, further preferably 200 μm or less, and particularly preferably 150 μm or less. If the thickness is small, handleability tends to be poor. Meanwhile, if the thickness is large, not only is there a problem with the cost, but also flatness tends to be poor due to curling when the film is wound into a roll and stored.

The haze of the base film of the present invention is preferably transparent from the viewpoint of visibility of the contents, and specifically, the haze is preferably 6% or less, more preferably 5% or less and further preferably 4% or less. The haze tends to worsen, for example, when the stretching temperature and the heat setting temperature are excessively high, when the cooling roll (CR) temperature is high and the cooling speed of the stretched raw sheet is slow, and when the amount of low molecular weight material is excessively large. Therefore, by adjusting these, it is possible to control the haze to fall within the above range.

The base film layer in the present invention may be subjected to a corona discharge treatment, a glow discharge treatment, a flame treatment, or a surface roughening treatment or may be subjected to a known anchor coating treatment, printing, decoration, or the like, as long as the object of the present invention is not impaired. It is generally suitable to use resins having excellent adhesiveness such as polyurethane and polyester in anchor coating, and an anchor coat layer for improving the barrier in the present invention will be described later.

While the packaging material of the present invention requires at least one base film having a gas barrier layer, it is preferred to paste two or more base films together because improvement in toughness and gas barrier properties as a packaging material can be expected. With respect to the toughness, by using two polypropylene-based biaxially stretched films generally having characteristics of large piercing strength, it is possible to design a packaging material that is comparable to the configuration widely used, as a packaging material, including two different materials of a polyester film and a polyamide film, for example. Also, with respect to the gas barrier properties, by using two base films, the film located therebetween is less likely to be influenced by the external environment, such as temperature, humidity, external bending, and the like, and hence, more stable gas barrier performance can be exhibited. In this sense, when two base films are used, it is particularly preferred that the coating layer or the inorganic thin film layer having gas barrier performance is laminated on the intermediate film.

[Gas barrier layer]

In the present invention, at least one of the base films is required to be a laminated base film having a gas barrier layer. As the gas barrier layer, it is necessary to laminate either of a coating layer (A) mainly composed of an organic matter, or an inorganic thin film layer (B) mainly composed of an inorganic matter as will be described later. Further, in order to assist the barrier properties of the gas barrier layer, lamination may also be executed using a later-described anchor coat (C) and a protective layer (D).

[Coating layer (A)]

In the present invention, as the gas barrier layer, the coating layer (A) may be provided. However, in the present invention, it is necessary to design while keeping in mind that there will be increase in the cost due to increase in the number of steps caused by providing the coating layer (A), and occurrence of environmental load such as recycling becoming difficult depending on the film thickness.

The deposition amount of the coating layer (A) is preferably 0.10 to 0.70 (g/m$^2$). The deposition amount of the coating layer (A) has a lower limit of preferably 0.15 (g/m$^2$) or more, more preferably 0.20 (g/m$^2$) or more, and further preferably 0.25 (g/m$^2$) or more, and an upper limit of preferably 0.65 (g/m$^2$) or less, more preferably 0.60 (g/m$^2$) or less, and further preferably 0.55 (g/m$^2$) or less. If the deposition amount of the coating layer (A) exceeds 0.70 (g/m$^2$), the gas barrier properties improve, but the cohesive force inside the coating layer becomes insufficient, and the uniformity of the coating layer also decreases. Accordingly, unevenness (increased haze, whitening) or defects may occur in the coating appearance, or it may be impossible to exhibit sufficient gas barrier properties and adhesiveness. In addition, in terms of processability, a large film thickness may cause blocking. Also, there is a concern regarding an adverse effect on the recyclability of the film, and the aspect of the environmental load is enhanced due to the increased use amounts of raw materials, solvents and the like. On the other hand, if the film thickness of the coating layer (A) is less than 0.10 ($g/m^2$), there is a concern that sufficient gas barrier properties and interlayer adhesion are not obtained.

As the resin composition for use in the coating layer (A) to be formed on the surface of the laminated film of the present invention, polyvinyl alcohol-based polymers are desired. Polyvinyl alcohol-based polymers have vinyl alcohol units as their main components, and can be expected to significantly improve the barrier performance owing to the high cohesiveness by the hydrogen bond structure. The degree of polymerization and the degree of saponification of the polyvinyl alcohol-based polymer are determined in accordance with the objective gas barrier properties, viscosity of an aqueous coating solution, etc. Regarding the degree of polymerization, since coating becomes difficult due to high viscosity of the aqueous solution and easy gelation, 2600 or less is preferred from the viewpoint of operability of coating. Regarding the degree of saponification, with the degree of saponification of less than 90%, sufficient oxygen gas barrier properties cannot be obtained under high humidity conditions, and with the degree of saponification exceeding 99.7%, preparation of an aqueous solution is difficult, and gelation is likely to occur, so that such degrees of saponification are unsuited for industrial production. Therefore, the degree of saponification is preferably 90 to 99.7%, and more preferably 93 to 99%. In the present invention, various copolymerized or modified polyvinyl alcohol-based polymers, such as a polyvinyl alcohol-based polymer copolymerized with ethylene and a polyvinyl alcohol-based polymer modified with silanol, may also be used as long as processability and productivity are not impaired.

The coating layer (A) of the present invention may contain an inorganic layered compound. Owing to the presence of the inorganic layered compound, a labyrinth effect against gas can be expected, and gas barrier properties are improved. By adding the inorganic layered compound, it is possible to reduce the humidity dependence of the gas barrier properties. Examples of the material include clay minerals (including synthetic products thereof) such as smectite, kaolin, mica, hydrotalcite, and chlorite. Specific examples include montmorillonite, beidellite, saponite, hectorite, sauconite, stevensite, kaolinite, nacrite, dickite, halloysite, hydrated halloysite, tetrasilylic mica, sodium taeniolite, muscovite, margarite, phlogopite, talc, antigorite, chrysotile, pyrophyllite, vermiculite, xanthophyllite, and chlorite. Furthermore, scaly silica or the like can be used as the inorganic layered compound. These materials may be used alone, or two or more of these materials may be used in combination. Among these materials, smectite (including synthetic products thereof) is particularly preferred because of its high effect of improving water vapor barrier properties.

Further, as the inorganic layered compound, those containing therein metal ions having redox properties, particularly iron ions, are preferred. Further, among such compounds, montmorillonite, which is a kind of smectite, is preferred from the viewpoint of coating suitability and gas barrier properties. As the montmorillonite, those conventionally known and used as gas barrier agents can be used.

For example, those represented by the following general formula:

$$(X, Y)_{2\text{-}3}Z_4O_{10}(OH)_2 \cdot mH_2O \cdot (W_\omega)$$

(in the formula, X represents Al, Fe (III), or Cr (III). Y represents Mg, Fe (II), Mn (II), Ni, Zn, or Li. Z represents Si or Al. W represents K, Na, or Ca. H2O represents interlayer water. m and $\omega$ represent positive real numbers.) can be used.

Among these, those in which W in the formula is Na are preferred because they are cleaved in an aqueous medium.

The size and shape of the inorganic layered compound are not particularly limited, but the particle size (major axis) is preferably 5 $\mu$m or less, more preferably 4 $\mu$m or less, and further preferably 3 $\mu$m or less. If the particle size is more than 5 $\mu$m, the dispersibility is poor, and as a result, the coatability and the coat appearance of the coating layer (A) may deteriorate. Meanwhile, the aspect ratio thereof is 50 to 5000, more preferably 100 to 4000, and further preferably 200 to 3000.

The blending ratio between the resin composition and the inorganic layered compound in the coating layer of the present invention is preferably 75/25 to 35/65 (wt%), more preferably 70/30 to 40/60 (wt%), and further preferably 65/35 to 45/55 (wt%). When the blending ratio of the inorganic layered compound is less than 25%, there is a concern that the barrier performance is insufficient. On the other hand, when the blending ratio is more than 65%, the dispersibility is impaired, and the coatability and adhesiveness may deteriorate.

The coating layer (A) of the present invention may contain various crosslinking agents for the purpose of improving the cohesive force and moisture-resistant thermal adhesiveness of the film as long as gas barrier properties and productivity are not impaired. Examples of the crosslinking agents include silicon-based crosslinking agents, oxazoline compounds, carbodiimide compounds, epoxy compounds, and isocyanate compounds. Among these, a silicon-based crosslinking agent is particularly preferred from the viewpoint that crosslinking reaction with a resin composition having a hydroxyl group and an inorganic thin film layer is enabled by blending the silicon-based crosslinking agent, and the water-resistant adhesiveness is improved. Examples of commonly used silicon-based crosslinking agents include metal alkoxides and silane coupling agents. Metal alkoxide is a compound that can be represented by the general formula: $M(OR)_n$ (M: metal of Si or Al, R: alkyl group such as $CH_3$ or $C_2H_5$). Specific examples include tetraethoxy silane $(Si(OC_2H_5)_4)$ and triisopropoxy aluminum $Al[OCH(CH_3)_2]_3$. Examples of the silane coupling agents include those having an epoxy group such as 3-glycidoxypropyl trimethoxysilane, those having an amino group such as 3-aminopropyltrimethoxysilane, those having a mercapto group such as 3-mercaptopropyltrimethoxysilane, those having an isocyanate group such as 3-isocyanatepropyltriethoxysilane, and tris-(3-trimethoxysilylpropyl)isocyanurate. Besides the above, as the crosslinking agent, an oxazoline compound, a carbodiimide compound, an epoxy compound, etc., may be used in combination. However, when recyclability is important, it is necessary to consider the amount of the crosslinking agent.

When the crosslinking agent is blended, the blending amount is preferably 0.05 to 4.00% by mass, more preferably 0.10 to 3.50% by mass, and further preferably 0.15 to 3.00% by mass. Within the above range, curing of the film proceeds and the cohesive force increases, resulting in a film having excellent water-resistant adhesiveness. If the blending amount exceeds 3.00% by mass, the abundance of the uncrosslinked part increases, and the curing proceeds too much to make the film hard, which may adversely deteriorate the adhesiveness. On the other hand, when the blending amount is less than 0.05% by mass, there is a concern that sufficient cohesive force cannot be obtained.

In the present invention, the film haze after lamination of the coating layer (A) is preferably 20% or less, more preferably 18% or less, and further preferably 16% or less, from the viewpoint of visibility of the contents. If the haze is more than 20%, in addition to significant impairment in transparency, surface irregularities may also be affected, which may lead to poor appearance during the subsequent printing process and so on. The haze can be adjusted by the composition ratio of the coating layer (A), solvent conditions, film thickness, etc. Here, the haze is evaluated in accordance with JIS K7136 using a turbidity meter (NDH2000, manufactured by NIPPON DENSHOKU Industries Co., Ltd.).

The coating method of the resin composition for coating layer is not particularly limited as long as it is a method of coating the film surface to form a layer. For example, ordinary coating methods such as gravure coating, reverse roll coating, wire bar coating, and die coating can be employed.

In forming the coating layer (A), it is preferred that after application of the resin composition for coating layer, pre-drying at a relatively low temperature is conducted to volatilize the solvent, and then main-drying at a high temperature is conducted to obtain a uniform film. The temperature of the pre-drying is preferably 80 to 110°C, more preferably 85 to 105°C, and further preferably 90 to 100°C. If the pre-drying temperature is lower than 80°C, the coating layer may be insufficiently dried. If the pre-drying temperature is higher than 110°C, drying may proceed before the coating layer has been wetted and spread, which may result in poor appearance.

Meanwhile, the main-drying temperature is preferably 110 to 140°C, more preferably 115 to 135°C, and further preferably 120 to 130°C. If the main-drying temperature is lower than 110°C, the film formation of the coating layer (A) may fail to proceed, and the cohesive force and adhesiveness may decrease, which may also result in an adverse effect on the barrier properties. If the temperature exceeds 140°C, excessive heat may be applied to the film, which may make the film brittle or increase wrinkles due to heat shrinkage.

A preferred drying time for the pre-drying is 3.0 to 10.0 seconds, more preferably 3.5 to 9.5 seconds, and further preferably 4.0 to 9.0 seconds. A preferred drying time for the main-drying is 3.0 to 10.0 seconds, more preferably 3.5 to 9.5 seconds, and further preferably 4.0 to 9.0 seconds. However, attention needs to be paid as the drying conditions vary depending on the type of heating medium and the air intake and exhaust conditions of a drying oven. Additionally, apart from the drying, an additional heat treatment for one to four days in as low a temperature range as possible, specifically in a temperature range of 40 to 60°C, is also further effective for promoting formation of the coating layer (A).

[Inorganic thin film layer (B)]

In the present invention, as the gas barrier layer, the inorganic thin film layer (B) may be provided on the surface of the base film. The inorganic thin film layer (B) is a thin film made of metal or an inorganic oxide. While the material that forms the inorganic thin film layer is not particularly limited as long as the material can be made into a thin film, preferred examples of the material from the viewpoint of gas barrier properties include inorganic oxides such as silicon oxide (silica), aluminum oxide (alumina), and a mixture of silicon oxide and aluminum oxide. From the viewpoint of enabling achievement of both flexibility and denseness of the thin film layer, a composite oxide of silicon oxide and aluminum oxide is particularly preferred. In the composite oxide, the mixing ratio of silicon oxide and aluminum oxide is preferably such that the mass ratio of Al in the metal content ranges from 20 to 70% by mass. If the Al concentration is less than 20% by mass, the water vapor barrier properties may be lowered. On the other hand, if the Al concentration exceeds 70% by mass, the inorganic thin film layer tends to be hard, and there is a concern that the film is broken during secondary processing such as printing or lamination, resulting in deterioration in gas barrier properties. The silicon oxide mentioned herein refers to various silicon oxides such as SiO or SiOz, or a mixture of these silicon oxides, and the aluminum oxide mentioned herein refers to various aluminum oxides such as AlO or $Al_2O_3$, or a mixture of these aluminum oxides.

The film thickness of the inorganic thin film layer (B) is usually 1 to 100 nm and preferably 5 to 50 nm. If the film thickness of the inorganic thin film layer (B) is less than 1 nm, it may be difficult to obtain satisfactory gas barrier properties. On the other hand, even if the thickness of the inorganic thin film layer (B) is made excessively large of over 100 nm, the effect of improving the gas barrier properties corresponding thereto is not obtained, and such a thickness is contrarily disadvantageous in terms of bending resistance and production cost.

A method for forming the inorganic thin film layer (B) is not particularly limited, and, for example, known vapor deposition methods including physical vapor deposition methods (PVD methods) such as a vacuum vapor deposition method, a sputtering method, and an ion plating method and chemical vapor deposition methods (CVD methods) may be appropriately employed. Hereinafter, a typical method for forming the inorganic thin film layer (B) will be described with a silicon oxide/aluminum oxide-based thin film being taken as an example. For example, when a vacuum vapor deposition method is employed, a mixture of $SiO_2$ and $Al_2O_3$, a mixture of $SiO_2$ and Al, or the like is preferably used as a raw material to be vapor-deposited. As such a raw material to be vapor-deposited, particles are usually used, and in such a case, the size of each particle is desirably such a size that the pressure at the time of vapor deposition does not change, and a preferred particle diameter is 1 mm to 5 mm. For heating, a method such as resistance heating, high frequency induction heating, electron beam heating, or laser heating can be employed. Alternatively, oxygen, nitrogen, hydrogen, argon, carbon dioxide gas, water vapor, or the like may be introduced as a reaction gas, or reactive vapor deposition using means such as ozone addition and ion assist may be employed. Furthermore, the film formation conditions can also be changed arbitrarily, for example, by applying a bias to the object to be vapor-deposited (laminated film to be subjected to vapor deposition), or heating or cooling the object to be vapor-deposited. Such vapor deposition materials, reaction gas, bias for the object to be vapor-deposited, heating/cooling, and the like can be changed in the same manner also in the case of employing a sputtering method or a CVD method.

[Anchor coat layer (C)]

In the present invention, as an assistant layer for exhibiting sufficient gas barrier properties and adhesiveness when the above-described gas barrier layer is laminated, an anchor coat layer (C) may be provided. By having the anchor coat layer, it is possible to suppress expression of oligomers and anti-blocking materials from the polypropylene resin. Further, in laminating another layer on the anchor coat layer (C), adhesion power between the layers can be enhanced. In particular, in formation of the inorganic thin film layer, formation of the inorganic layer is promoted not only by the adhesion power, but also by smoothing of the surface, and the effect of improving the gas barrier properties is also expected. In addition, by using a material having a certain degree of gas barrier properties (referred to as gas barrier assistance) for the anchor coat layer (C) itself, it is also possible to greatly improve the gas barrier performance of the film when the aforementioned gas barrier layer is laminated. Furthermore, since the anchor coat layer (C) prevents entry of hot water into the base, film whitening after boiling or retorting can also be reduced.

As the gas barrier assistance of the film when only the anchor coat layer (C) is laminated, it is preferred that the oxygen permeability in an environment of 23°C and 65% RH is 10000 ml/m²·d·MPa or less from the viewpoint of exhibiting excellent gas barrier properties after lamination of the aforementioned gas barrier layer. The oxygen permeability is further preferably 9000 ml/m²·d·MPa or less and more preferably 8000 ml/m²·d·MPa or less. If the oxygen permeability exceeds 10000 ml/m²·d·MPa, it becomes difficult to support applications that require high gas barrier properties because sufficient barrier performance is not obtained even after lamination of the gas barrier layer.

In the present invention, it is preferred that the deposition amount of the anchor coat layer (C) is 0.10 to 0.50 g/m². This makes it possible to control the anchor coat layer (C) to be uniform in coating, resulting in a film having less coating unevenness and defects. Furthermore, the anchor coat layer (C) contributes to suppressing expression of oligomers, so that the haze after wet heating stabilizes. The deposition amount of the anchor coat layer (C) is preferably 0.15 g/m² or more, more preferably 0.20 g/m² or more, and further preferably 0.35 g/m² or more, and is preferably 0.50 g/m² or less, more preferably 0.45 g/m² or less, and further preferably 0.40 g/m² or less. If the deposition amount of the anchor coat layer (C) exceeds 0.50 g/m², the gas barrier assistance improves, but the cohesive force inside the anchor coat layer becomes insufficient, and the uniformity of the anchor coat layer also decreases. Accordingly, unevenness or defects are generated in the coating appearance. In terms of processability, a large film thickness may cause blocking, and may cause the production cost rise. Also, there is a concern regarding an adverse effect on the recyclability of the film, and the aspect of the environmental load is enhanced due to the increased use amounts of raw materials, solvents and the like. On the other hand, if the film thickness of the anchor coat (C) is less than 0.10 g/m², there is a concern that sufficient gas barrier assistance and interlayer adhesion are not obtained.

Examples of the resin composition for use in the anchor coat layer (C) of the present invention include those obtained by adding a curing agent such as an epoxy-based curing agent, an isocyanate-based curing agent, or a melamine-based curing agent to a resin such as a urethane-based resin, a polyester-based resin, an acrylic-based resin, a titanium-based resin, an isocyanate-based resin, an imine-based resin, or a polybutadiene-based resin. A crosslinking agent such as a silicon-based crosslinking agent, an oxazoline compound, a carbodiimide compound, or an epoxy compound may further be contained.

Containing a urethane resin is particularly preferred because high cohesiveness of the urethane bond itself gives barrier performance, polar groups interact with the inorganic thin film layer, and flexibility is given by the existence of an amorphous part, and hence damage can be restrained even when a bending load is applied. Also, a polyester resin is preferred because the same effect is expected. In the present invention, it is particularly preferred to contain a polyurethane composed of a polyester and an isocyanate, and from the viewpoint of improving the adhesiveness, it is more preferred to add a silicon-based crosslinking agent.

As the urethane resin for use in the anchor coat layer (C) of the present invention, it is more preferred to use a urethane resin containing an aromatic or araliphatic diisocyanate component as a main component. Among these, it is particularly preferred to contain a metaxylene diisocyanate component. By using the above resin, it is possible to further increase the cohesive force of the urethane bond by the stacking effect between aromatic rings, resulting in excellent gas barrier assistance.

In the present invention, the proportion of the aromatic or araliphatic diisocyanate in the urethane resin for use in the anchor coat layer (C) is preferably in the range of 50 % by mole or more (50 to 100 % by mole) in 100 % by mole of the polyisocyanate component. The proportion of the total amount of the aromatic or araliphatic diisocyanate is preferably 60 to 100 % by mole, more preferably 70 to 100 % by mole, and further preferably 80 to 100 % by mole. If the proportion of the total amount of the aromatic or araliphatic diisocyanate is less than 50 % by mole, excellent gas barrier assistance may not be obtained.

The urethane resin for use in the anchor coat layer (C) of the present invention may contain various crosslinking agents for the purpose of improving the cohesive force and moisture-resistant thermal adhesiveness of the film. Examples of the crosslinking agents include silicon-based crosslinking agents, oxazoline compounds, carbodiimide compounds, and epoxy compounds. Among these, a silicon-based crosslinking agent is particularly preferred from the viewpoint of improving the water-resistant adhesiveness especially with the inorganic thin film layer by mixing the silicon-based crosslinking agent. Besides the above, as the crosslinking agent, an oxazoline compound, a carbodiimide compound, an epoxy compound, etc., may be used in combination.

As the silicon-based crosslinking agent, a silane coupling agent is preferred from the viewpoint of crosslinking between an inorganic matter and an organic matter. Examples of the silane coupling agent include hydrolyzable alkoxysilane compounds, for example, halogen-containing alkoxysilanes (chloro C2-4 alkyltri C1-4 alkoxysilanes such as 2-chloroethyltrimethoxysilane, 2-chloroethyltriethoxysilane, 3-chloropropyltrimethoxysilane, and 3-chloropropyltriethoxysilane), alkoxysilanes having an epoxy group [glycidyloxy C2-4 alkyltri C1-4 alkoxysilanes such as 2-glycidyloxyethyltrimethoxysilane, 2-glycidyloxyethyltriethoxysilane, 3-glycidyloxypropyltrimethoxysilane, and 3-glycidyloxypropyltriethoxysilane, glycidyloxydi C2-4 alkyldi C1-4 alkoxysilanes such as 3-glycidyloxypropylmethyldimethoxy silane and 3-glycidyloxypropylmethyl diethoxysilane, (epoxycycloalkyl) C2-4 alkyltri C1-4 alkoxysilanes such as 2-(3,4-epoxycyclohexyl)ethyltrimethoxysilane, 2-(3,4-epoxycyclohexyl)ethyltriethoxysilane, and 3-(3,4-epoxycyclohexyl)propyltrimethoxysilane, and so on], alkoxysilanes having an amino group [amino C2-4 alkyltri C1-4 alkoxysilanes such as 2-aminoethyltrimethoxysilane, 3-aminopropyltrimethoxysilane, and 3-aminopropyltriethoxysilane, aminodi C2-4 alkyldi C1-4 alkoxysilanes such as 3-aminopropylmethyldimethoxysilane and 3-aminopropylmethyldiethoxysilane, (2-amino C2-4 alkyl)amino C2-4 alkyltri C1-4 alkoxysilanes such as 2-[N-(2-aminoethyl)amino]ethyltrimethoxysilane, 3-[N-(2-aminoethyl)amino]propyltrimethoxysilane, and 3-[N-(2-aminoethyl)amino]propyltriethoxysilane, (amino C2-4 alkyl)aminodi C2-4 alkyldi C1-4 alkoxysilanes such as 3-[N-(2-aminoethyl)amino]propylmethyldimethoxysilane and 3-[N-(2-aminoethyl)amino]propylmethyldiethoxysilane, and so on], alkoxysilanes having a mercapto group (mercapto C2-4 alkyltri C1-4 alkoxysilanes such as 2-mercaptoethyltrimethoxysilane, 3-mercaptopropyltrimethoxysilane, and 3-mercaptopropyltriethoxysilane, mercapto di C2-4 alkyldi C1-4 alkoxysilanes such as 3-mercaptopropylmethyldimethoxysilane, and 3-mercaptopropylmethyldiethoxysilane, and so on), alkoxysilanes having a vinyl group (vinyltri C1-4 alkoxysilanes such as vinyltrimethoxysilane and vinyl triethoxysilane), and alkoxysilanes having an ethylenic unsaturated bonding group [(meth)acryloxy C2-4 alkyltri C1-4 alkoxysilanes such as 2-(meth)acryloxyethyltrimethoxysilane, 2-(meth)acryloxyethyltriethoxysilane, 3-(meth)acryloxypropyltrimethoxysilane, and 3-(meth)acryloxypropyltriethoxysilane, (meth)acryloxydi C2-4 alkyldi C1-4 alkoxysilanes such as 3-(meth)acryloxypropylmethyldimethoxysilane and 3-(meth)acryloxypropylmethyldiethoxysilane), and so on. These silane coupling agents may be used alone, or two or more of these may be used in combination. Among these silane coupling agents, silane coupling agents having an amino group are preferred.

The silicon-based crosslinking agent is added to the coating layer preferably in an amount of 0.05 to 4.00% by mass, more preferably 0.10 to 3.50% by mass, and further preferably 0.15 to 3.00% by mass. By the addition of the silicon-based crosslinking agent, the curing of the film advances and the cohesive force is improved, resulting in a film excellent in water-resistant adhesiveness, and the effect of preventing expression of oligomers can also be expected. If the adding amount exceeds 3.00% by mass, the curing of the film advances and the cohesive force is improved, but some unreacted portions are also generated, and the adhesiveness between the layers may be deteriorated. On the other hand, if the adding amount is less than 0.05% by mass, there is a concern that sufficient cohesive force cannot be obtained.

The polyester resin for use in the anchor coat layer (C) of the present invention is produced by polycondensation of a polyvalent carboxylic acid component and a polyhydric alcohol component. The molecular weight of the polyester resin is not particularly limited as long as the toughness, coating suitability, and solvent solubility that are sufficient for a coating material can be imparted, and is 1000 to 50000, and further preferably 1500 to 30000 in terms of number average molecular weight. The functional group of the polyester terminal is not particularly limited, and the polyester may have an alcohol terminal, or a carboxylic acid terminal, or both. However, when an isocyanate-based curing agent is used concomitantly, it is necessary to use a polyester polyol mainly having alcohol terminals.

It is preferred that Tg of the polyester resin for use in the anchor coat layer (C) of the present invention is 10°C or higher. This is because at lower temperatures than this, the resin has adhesiveness after the coating operation, and tends to cause blocking, and the winding operation after the coating becomes difficult. This is because, at a Tg of 10°C or lower, even if an anti-blocking material is added, it becomes difficult to prevent blocking even under high pressure around the winding core. Tg is more preferably 15°C or higher and further preferably 20°C or higher.

The polyester resin for use in the anchor coat layer (C) of the present invention is used by polycondensation of a polyvalent carboxylic acid component and a polyhydric alcohol component. The polyvalent carboxylic acid component of the polyester resin used in the present invention is featured by comprising at least one ortho-oriented aromatic dicarboxylic acid or anhydride thereof. Ortho orientation improves the solubility in the solvent, and enables uniform coating on the base. The uniformly coated film reduces the variation in barrier performance and consequently contributes to oligo bleaching suppression. Since the film has excellent flexibility and the interfacial adhesive force is improved by employing the ortho orientation, it is possible to reduce damage to the base by the wet heat treatment, leading to the suppression of oligomers.

Examples of aromatic polyvalent carboxylic acids substituted at the ortho position with a carboxylic acid, or anhydrides thereof include orthophthalic acid or anhydrides thereof, naphthalene 2,3-dicarboxylic acid or anhydrides thereof, naphthalene 1,2-dicarboxylic acid or anhydrides thereof, anthraquinone 2,3-dicarboxylic acid or anhydrides thereof, and 2,3-anthracene carboxylic acid or anhydrides thereof. These compounds may have substituents on any carbon atom of the aromatic ring. Examples of the substituents include a chloro group, a bromo group, a methyl group, an ethyl group, an i-propyl group, a hydroxyl group, a methoxy group, an ethoxy groups, a phenoxy group, a methylthio group, a phenylthio group, a cyano group, a nitro group, an amino group, a phthalimide group, a carboxyl group, a carbamoyl group, an N-ethylcarbamoyl group, a phenyl group, or a naphthyl group. In addition, the polyester polyol having a content of 70 to 100 % by mole with respect to 100 % by mole of all of these polycarboxylic acid components is particularly preferred because it has a high effect of improving the barrier properties, and is particularly excellent in solvent solubility that is essential as a coating material.

In the present invention, another polyvalent carboxylic acid component may be copolymerized as long as the effect of the invention is not impaired. Specifically, as aliphatic polyvalent carboxylic acids, succinic acid, adipic acid, azelaic acid, sebacic acid, dodecandicarboxylic acid, and the like, as unsaturated bond-containing polyvalent carboxylic acids, maleic anhydride, maleic acid, fumaric acid, and the like, as alicyclic polyvalent carboxylic acids, 1,3-cyclopentanedicarboxylic acid, 1,4-cyclohexadicarboxylic acid, and the like, and as aromatic polyvalent carboxylic acids, terephthalic acid, isophthalic acid, pyromellitic acid, trimellitic acid, 1,4-naphthalene dicarboxylic acid, 2,5-naphthalene dicarboxylic acid, 2,6-naphthalene dicarboxylic acid, naphthalic acid, biphenyldicarboxylic acid, diphenic acid and anhydrides thereof, 1,2-bis(phenoxy)ethane-p,p'-dicarboxylic acid, and anhydrides or ester formable derivatives of these dicarboxylic acids; p-hydroxybenzoic acid, p-(2-hydroxyethoxy)benzoic acid, and ester formable derivatives of these dihydroxycarboxylic acids; and other polybasic acids, can be used solely or in a mixture of two or more kinds. Among them, succinic acid, 1,3-cyclopentanedicarboxylic acid, isophthalic acid, 2,6-naphthalenedicarboxylic acid, 1,8-naphthalic acid, and diphenic acid are preferred from the viewpoint of organic solvent solubility and gas barrier properties.

While the polyhydric alcohol component of the polyester for use in the anchor coat layer (C) of the present invention is not particularly limited as long as a polyester showing the performance of gas barrier coverage can be synthesized, it is preferred to contain polyhydric alcohol components including at least one selected from the group consisting of ethylene glycol, propylene glycol, butylene glycol, neopentyl glycol, cyclohexanedimethanol, and 1,3-bishydroxyethylbenzene. Among them, it is most preferred to use ethylene glycol as a main component because it is presumed that the smaller the number of carbon atoms between the oxygen atoms, the molecular chain is less likely to be excessively flexible, and less likely to permeate oxygen.

While it is preferred to use the above-described polyhydric alcohol component in the present invention, another polyhydric alcohol component may be copolymerized as long as the effect of the present invention is not impaired. Specifically, examples of diols include 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol, and examples of tri or more hydric alcohols include glycerol, trimethylolpropane, trimethylolethane, tris(2-hydroxyethyl)isocyanurate, 1,2,4-butanetriol, pentaerythritol, and dipentaerythritol. In particular, a polyester in which a combination of glycerol and tris(2-hydroxyethyl)isocyanurate is used among the trihydric alcohols is particularly preferably used because organic solvent solubility is excellent due to moderately high crosslinking density coming from the branched structure, and it is also excellent in barrier function.

Examples of the catalyst used in the reaction to obtain a polyester of the present invention include acid catalysts including tin-based catalysts such as monobutyl tin oxide and dibutyl tin oxide, titanium-based catalysts such as tetra-isopropyl-titanate and tetra-butyl-titanate, and zirconia-based catalysts such as tetra-butyl-zirconate. It is preferred to use a combination of the aforementioned titanium-based catalyst such as tetra-isopropyl-titanate or tetra-butyl-titanate, and the aforementioned zirconia catalyst, which have high activity for esterification. The catalyst amount is 1 to 1000 ppm and more preferably 10 to 100 ppm, with respect to the total mass of the reactant material used. Below 1 ppm, the effect as a catalyst is difficult to be obtained, and above 1000 ppm, there may be a problem of inhibiting the urethanization reaction when an isocyanate curing agent is used.

In the present invention, when using a polyester resin as a main agent of the coating agent constituting the anchor coat layer (C), it is particularly preferred to use an isocyanate-based curing agent to give a urethane resin. In this case, the coating layer is crosslinked, so that there is an advantage that heat resistance, wear resistance, and rigidity are improved. Therefore, use for boiling and retort packaging is also facilitated. On the other hand, there are also problems that the liquid cannot be reused after mixing of the curing agent and the curing (aging) process is indispensable after the coating. As an advantage, the following points are exemplified: as a simple overcoat varnish, it is easy to control the coating production without the possibility of thickening of the coating liquid; the coating liquid can be diluted and reused; and additionally, the curing step (so-called aging step) is not required. In this case, the terminal of the polyester used may be polyol or polycarboxylic acid, or a mixture of both without causing any problem. On the other hand, since the resin of the coating layer is of a straight chain, there may be a case that heat resistance or wear resistance is insufficient, and it may cause a problem of difficulty in using for boiling or retort packaging.

When a curing agent is used in the coating layer, the curing agent is of an isocyanate curing type from the viewpoint of heat resistance of the film because it is a coating to the film, and in this case, the resin component of the coating material needs to be polyester polyol. On the other hand, when using an epoxy-based compound as a curing agent, it needs to be polyester polycarboxylic acid. In these cases, there is an advantage that the heat resistance, wear resistance, and rigidity are improved because the coating layer is cross-linked. Therefore, use for boiling and retort packaging is also facilitated. On the other hand, there are problems that the liquid cannot be reused after mixing of the curing agent and the curing (aging) process is indispensable after the coating.

When the polyester has a hydroxyl group, the polyisocyanate compound used in the present invention at least partly reacts, and forms a urethane structure. Because of this, the resin component is highly polarized, and the gas barrier function can be further enhanced by cohering polymer chains. Further, when the resin of the coating material is a straight chain type resin, it is possible to impart heat resistance and wear resistance by crosslinking with tri- or more-valent polyisocyanate. As the polyisocyanate compound used in the present invention, any of diisocyanates, tri- or more-valent polyisocyanates, low molecular weight compounds, and high molecular weight compounds may be used. However, from the viewpoint of gas barrier improving function, it is preferred to contain an aromatic ring or an aliphatic ring in a part of the skeleton. For example, as isocyanates having an aromatic ring, toluene diisocyanate, diphenylmethane diisocyanate, xylene diisocyanate, and naphthalene diisocyanate, and as the isocyanates having an aliphatic ring, hydrogenated xylene diisocyanate, hydrogenated toluene diisocyanate, isophorone diisocyanate, norborne diisocyanate, or trimers of these isocyanate compounds, and terminal isocyanate group-containing compounds obtained by reacting an excess amount of these isocyanate compounds, and a low molecular weight active hydrogen compound such as ethylene glycol, propylene glycol, trimethylol propane, glycerin, sorbitol, ethylenediamine, monoethanolamine, diethanolamine or triethanolamine, or a high molecular weight active hydrogen compound such as various polyester polyols, polyether polyols, and polyamides can be recited.

While the method for forming the anchor coat layer (C) is not particularly limited, a conventional known method, such as a coating method can be employed. Among the coating methods, suitable methods include the off-line coating method and the in-line coating method. For example, in the case of an in-line coating method performed in the process of manufacturing a base film layer, the drying and heat treatment conditions at the time of coating depend on the thickness of coat and conditions of the apparatus, but it is preferred to perform delivery into a stretching step in the right angle direction immediately after coating, and drying in the preheating zone or the stretching zone of the stretching step. In such a case, usually, it is preferred that the temperature is about 50 to 250°C.

The coating method of the resin composition for the anchor coat layer (C) is not particularly limited as long as it is a method of coating the film surface to form a layer. For example, ordinary coating methods such as gravure coating, reverse roll coating, wire bar coating, and die coating can be employed.

In forming the anchor coat layer (C), it is preferred that the resin composition for anchor coat layer is dried by heating after application thereof, and in that case, the drying temperature is preferably 100 to 145°C, more preferably 110 to 140°C, and further preferably 110 to 130°C. If the drying temperature is lower than 100°C, the anchor coat layer may be insufficiently dried. On the other hand, if the drying temperature exceeds 145°C, excessive heat may be applied to the film, which may make the film brittle or impair the processability due to shrinkage. In particular, it is particularly preferred to first volatilize the solvent under a relatively low temperature condition of 80°C to 110°C immediately after application, and then dry the resultant matter at 120°C or higher since a uniform film is obtained. Apart from the drying, it is further effective to add an additional heat treatment at as low a temperature range as possible for promoting film formation of the anchor coat layer.

[Protective layer (D) on inorganic thin film]

In the present invention, a protective layer (D) may be provided on the inorganic thin film layer which is a gas barrier layer. The inorganic thin film layer consisting of a metal oxide layer is not a completely dense film, and minute defect portions are interspersed therein. By applying a later-described particular resin composition for protective layer on the metal oxide layer to form a protective layer, the resin in the resin composition for protective layer permeates the defect portions of the metal oxide layer, resulting in an effect of stabilizing the barrier properties of the gas barrier layer. In addition, by using a material having gas barrier properties for the protective layer itself, the gas barrier performance of the laminated film is also improved.

In the present invention, it is preferred that the deposition amount of the protective layer (D) is 0.10 to 0.40 $g/m^2$. This makes it possible to control the protective layer to be uniform in coating, resulting in a film having less coating unevenness and defects. The cohesive force of the protective layer (D) itself is improved, and the adhesion between the inorganic thin film layer and the protective layer is also strengthened. The deposition amount of the protective layer is preferably 0.13 $(g/m^2)$ or more, more preferably 0.16 $(g/m^2)$ or more, and further preferably 0.19 $(g/m^2)$ or more, and is preferably 0.37 $(g/m^2)$ or less, more preferably 0.34 $(g/m^2)$ or less, and further preferably 0.31 $(g/m^2)$ or less. If the deposition amount of the protective layer (D) exceeds 0.400 $(g/m^2)$, the gas barrier properties improve, but the cohesive force inside the protective layer becomes insufficient, and the uniformity of the protective layer also decreases. Accordingly, unevenness or defects may occur in the coating appearance, or it may be impossible to exhibit sufficient gas barrier properties and adhesiveness. On the other hand, if the film thickness of the protective layer (D) is less than 0.10 $(g/m^2)$, there is a concern that sufficient gas barrier properties and interlayer adhesion are not obtained.

As the resin composition for use in the protective layer (D) to be formed on the surface of the inorganic thin film layer of the present invention, a polyvinyl alcohol-based resin, a urethane-based resin, a polyester-based resin, an acrylic-based resin, a titanium-based resin, an isocyanate-based resin, an imine-based resin, a polybutadiene-based resin, or the like can be used, and further, an epoxy-based curing agent, an isocyanate-based curing agent, a melamine-based curing agent, a silanol-based curing agent, or the like may be added.

The coating method of the resin composition for protective layer is not particularly limited as long as it is a method of coating the film surface to form a layer. For example, ordinary coating methods such as gravure coating, reverse roll coating, wire bar coating, and die coating can be employed.

In forming the protective layer (D), it is preferred that a resin composition for protective layer is dried by heating after application thereof, and in that case, the drying temperature is preferably 100 to 160°C, more preferably 110 to 150°C, and further preferably 120 to 140°C. If the drying temperature is lower than 100°C, the protective layer may be insufficiently dried, the film formation of the protective layer may fail to proceed, and the cohesive force and water-resistant adhesiveness may decrease, which may result in deterioration in barrier properties and tearing-by-hand property. On the other hand, if the drying temperature exceeds 160°C, excessive heat may be applied to the film, which may make the film brittle and deteriorate the piercing strength, and shrinkage may impair the processability. Regarding the protective film, it is particularly preferred to first volatilize the solvent under a relatively low temperature condition of 90°C to 110°C immediately after application, and then dry the resultant matter at 130°C or higher since a uniform transparent film is obtained. Apart from the drying, it is further effective to add an additional heat treatment at as low a temperature range as possible for promoting film formation of the protective layer.

[Other films]

In the present invention, within the range of satisfying the later-described monomaterial ratio with respect to the packaging material, another film other than the base film mainly composed of a polyolefin-based resin may be provided. Examples of the other film for use in the present invention include films obtained by melt extruding a plastic, and subjecting the resultant matter to stretching in the machine direction and/or transverse direction, cooling, and heat setting as needed. Examples of the plastic include polyamide represented by nylon 4, 6, nylon 6, nylon 6·6, and nylon 12, polyester represented by polyethylene terephthalate, polybutylene terephthalate, and polyethylene−2,6−naphthalate, polyvinyl chloride, polyvinylidene chloride, polyvinyl alcohol, ethylene vinyl alcohol, wholly aromatic polyamide, polyamide imide, polyimide, polyether imide, polysulfone, polystyrene, and polylactic acid.

The other film in the present invention may be of any film thickness depending on the desired purpose, such as mechanical strength, transparency, and so on. Although not particularly limited, 5 〜 250 $\mu$m is usually recommended, and 10 〜 60 $\mu$m is desired when used as a packaging material. However, it is necessary to consider the later-described monomaterial ratio of the packaging materials.

The other film in the present invention may be a laminated film of one kind or two or more kinds of plastic films. In the case of a laminated film, the type of a laminate, the number of laminated layers, the method of lamination, etc., are not particularly limited, and can be arbitrarily selected from known methods in accordance with the purpose.

[Heat sealable resin layer]

In the packaging material of the present invention, it is necessary to make a laminate in which a heat sealable resin layer is formed. The heat sealable resin layer is generally formed by laminating a thermoplastic polymer that forms the heat sealable resin layer by extrusion lamination or dry lamination, but the heat sealable resin layer may be coextruded, or a coated film may be prepared. As a thermoplastic polymer that forms the heat sealable resin layer, those capable of sufficiently exhibiting adhesiveness, for example, polyethylene resins such as HDPE, LDPE, and LLDPE, polypropylene resins, ethylene-vinyl acetate copolymers, ethylene-$\alpha$-olefin random copolymers, ionomer resins, and the like, which are polyolefin-based polymers, can be used. Among these, LLDPE or polypropylene resin which are versatile from the viewpoint of durability, sealing strength, price, and monomaterialization is particularly preferred. The thickness of the heat sealable resin layer is preferably 5 to 100 $\mu$m, further preferably 10 to 95 $\mu$m, and more preferably 15 to 90 $\mu$m. If the thickness is less than 5 $\mu$m, there is a possibility that sufficient sealing strength is not obtained, or stiffness is lost and it becomes difficult to handle. On the other hand, if the thickness exceeds 100 $\mu$m, the stiffness is high and handleability as a bag may deteriorate, sealing at high temperature becomes necessary, and there is a concern that thermal wrinkles are generated in the base film on the front side. Also, the price may be excessively high.

[Adhesive layer]

As the adhesive layer used in the present invention, a general-purpose adhesive for lamination can be used. For example, (non) solvent-type, water-based, or hot-melt adhesives containing poly(ester)urethane-based, polyester-based, polyamide-based, epoxy-based, poly(meth)acryl-based, polyethyleneimine-based, ethylene-(meth)acrylic acid-based, polyvinyl acetate-based, (modified) polyolefin-based, polybutadiene-based, wax-based, casein-based adhesives, etc., as main ingredients can be used. Among these, urethane-based or polyester-based adhesives are preferred in consideration of heat resistance and flexibility that can follow dimensional change of each base material. As a lamination method of the adhesive layer, coating may be performed, for example, by a direct gravure coating method, a reverse gravure coating method, a kiss coating method, a die coating method, a roll coating method, a dip coating method, a knife coating method, a spray coating method, a fountain coating method, or another method, and the coating amount after drying is preferably 1 to 8 g/m$^2$ in order to exhibit sufficient adhesiveness. The coating amount is more preferably 2 to 7 g/m$^2$ and further preferably 3 to 6 g/m$^2$. If the coating amount is less than 1 g/m$^2$, it becomes difficult to attach the adhesive layer over the entire surface, resulting in decreased adhesive strength. Moreover, if the coating amount exceeds 8 g/m$^2$, it takes time for the film to completely cure, and unreacted substances tend to remain, resulting in decreased adhesive strength.

[Printed layer]

Furthermore, the packaging material of the present invention may have at least one layer of a printed layer between or outside the base film layer and the heat sealable resin layer.
As a print ink for forming the printed layer, an aqueous or solvent-based resin-containing print ink can be preferably used. Here, examples of the resin for use in the print ink include acrylic-based resins, urethane-based resins, polyester-based resins, vinyl chloride-based resins, vinyl acetate copolymer resins, and mixtures of these resins. The print ink may contain known additives such as an antistatic agent, a light beam blocking agent, an ultraviolet absorber, a plasticizer, a lubricant, a filler, a colorant, a stabilizer, a lubricating agent, a defoamer, a crosslinking agent, an anti-blocking agent, and an antioxidant. A printing method for providing the printed layer is not particularly limited, and known printing methods such as an offset printing method, a gravure printing method, and a screen printing method can be used. For drying the solvent after printing, known drying methods such as a hot air-drying method, a heat roll drying method, and an infrared drying method can be used.

[Characteristics of packaging material]

While any conceivable laminate configuration may be employed for the packaging material of the present invention, as described above, from the viewpoint of improving the toughness and the gas barrier performance, one exemplary preferable configuration is a laminate obtained, for example, by laminating a film laminated with a gas barrier layer in such a manner that the film is sandwiched by a base film not having a gas barrier layer, and a thermoplastic copolymer having a heat sealable resin layer. In this case, laminating the printed layer on the base film of the front side advantageously eliminates the necessity of printing on the film having a gas barrier layer. Besides the above, pasting together a white base film or a heat sealable resin layer so as to enhance the concealability, or pasting together an ultraviolet cutting film so as to block light is also one of preferred configurations.

In the packaging material of the present invention, at least one base film delaminated from the packaging material was measured by a thermomechanical analyzer. It is required that the heating elongation rate at 130°C is 6% or less both in the MD direction and the TD direction. Thus, it is possible to ensure the heat resistance necessary for use as a package. For example, the finishing property is excellent and the sealing strength is stable when heat sealing is conducted at a high temperature of 130°C or higher, and it is possible to achieve a well-finished package that undergoes little dimensional change and appearance change not only at the time of boiling at 95°C, but also at the time of a severe wet heat treatment such as high retorting at 130°C. The heating elongation rate at 130°C in the MD direction and the TD direction is preferably 5.5% or less, more preferably 5.0% or less, and further preferably 4.5% or less, and the lower limit is preferably 0%. If the heating elongation rate at 130°C is outside the above range, the heat resistance of the package deteriorates, which may result in poor appearance during sealing or during the wet heat treatment. In the present invention, the heating elongation rate is a value measured by a thermomechanical analyzer (TMA) method, and more specifically, the heating elongation rate is determined according to the method described in Examples. By using the TMA method, it is possible to quantitatively determine the dimensional change due to the thermal load under application of a certain tension. Further, since the tension and heat amount can be freely set assuming each processing, it is considered that the result will be an index for confirming the behavior similar to the actual processing.

In the present invention, in order to make the heating elongation rate of the base film delaminated from the packaging material fall within the above range, it is preferred to use a base film having a heating elongation rate at 130°C of 10% or less both in the MD direction and the TD direction. Furthermore, it is possible to reduce the heating elongation rate by subjecting the base film to a post-heat treatment. The heat treatment may be achieved by conducting an annealing treatment for the base film in a drying furnace, or adding heat in the aforementioned inorganic thin film forming step or in an anchor coat layer/protective layer coating step. As a heat addition condition at this time, it is preferred that the surface temperature of the film during heating is 65°C or higher, more preferably 70°C or higher, and further preferably 75°C or higher. However, if the film temperature is 90°C or higher, there is a concern that expansion and contraction become inversely large to lead to deterioration in quality such as wrinkles and the like, and thus, the upper limit of the heat addition is 90°C.

It is preferred for the packaging material of the present invention to have an oxygen permeability under a condition of 23°C and 65% RH, of 60 ml/m$^2$·d·MPa or less from the viewpoint of exhibiting excellent gas barrier properties. Furthermore, by providing a barrier layer on each film, the oxygen permeability can be preferably 50 ml/m$^2$·d·MPa or less, and more preferably 40 ml/m$^2$·d·MPa or less. If the oxygen permeability exceeds 60 ml/m$^2$·d·MPa, it becomes difficult to support applications that require high gas barrier properties. On the other hand, the oxygen permeability of less than 0.5 ml/m$^2$·d·MPa is not preferred because, while the barrier performance is excellent, the residual solvent is less permeable to the outside of the bag, and there is a concern that the amount migrating to the contents relatively increases. A preferred lower limit of the oxygen permeability is 0.5 ml/m$^2$·d·MPa or more.

It is preferred for the packaging material of the present invention to have an oxygen permeability under a condition of 23°C and 65% RH after a boiling treatment at 95°C for 30 minutes, of 60 ml/m$^2$·d·MPa or less from the viewpoint of exhibiting excellent gas barrier properties. Furthermore, by providing a barrier layer on each film, the oxygen permeability can be preferably 50 ml/m$^2$·d·MPa or less, and more preferably 40 ml/m$^2$·d·MPa or less. If the oxygen permeability exceeds 60 ml/m$^2$·d·MPa, it becomes difficult to support applications that require high gas barrier properties. On the other hand, the oxygen permeability of less than 0.5 ml/m$^2$·d·MPa is not preferred because, while the barrier performance is excellent, the residual solvent is less permeable to the outside of the bag, and there is a concern that the amount migrating to the contents relatively increases. A preferred lower limit of the oxygen permeability is 0.5 ml/m$^2$·d·MPa or more.

It is preferred for the packaging material of the present invention to have a water vapor permeability under a condition of 40°C and 90% RH, of 5.0 g/m$^2$·d or less from the viewpoint of exhibiting excellent gas barrier properties. Furthermore, by providing a barrier layer on each film, the water vapor permeability can be preferably 4.0 g/m$^2$·d or less, and more preferably 3.0 g/m$^2$·d or less. If the water vapor permeability exceeds 5.0 g/m$^2$·d, it becomes difficult to support applications that require high gas barrier properties. On the other hand, the water vapor permeability of less than 0.1 g/m$^2$ is not preferred because, while the barrier performance is excellent, the residual solvent is less permeable to the outside of the bag, and there is a concern that the amount migrating to the contents relatively increases. A preferred lower limit of the water vapor permeability is 0.1 g/m$^2$ or more.

It is preferred for the packaging material of the present invention to have a water vapor permeability under a condition of 40°C and 90% RH after a boiling treatment at 95°C for 30 minutes, of 5.0 g/m$^2$·d or less from the viewpoint of exhibiting excellent gas barrier properties. Furthermore, by providing a barrier layer on each film, the water vapor permeability can be preferably 4.0 g/m$^2$·d or less, and more preferably 3.0 g/m$^2$·d or less. If the water vapor permeability exceeds 5.0 g/m$^2$·d, it becomes difficult to support applications that require high gas barrier properties. On the other hand, the water vapor permeability of less than 0.1 g/m$^2$ is not preferred because, while the barrier performance is excellent, the residual solvent is less permeable to the outside of the bag, and there is a concern that the amount migrating to the contents relatively increases. A preferred lower limit of the water vapor permeability is 0.1 g/m$^2$ or more.

When the resin layers of the heat seal layers of the packaging material of the present invention are heat sealed at a temperature of 160°C with a seal bar pressure of 0.2 MPa for a sealing time of 2 seconds, the heat seal strength is preferably 15 N/15 mm or more. If the heat seal strength is less than 15 N/15 mm, the sealed part is easy to delaminate, and the packaging material cannot be used for applications where the amount of the contents is large, for example, and thus the applications as a packaging bag are limited. The heat seal strength is preferably 16 N/15 mm or more, and more preferably 17 N/15 mm or more.

As criteria for evaluation of monomaterialization in the packaging material of the present invention, when a ratio of the thickness of the polyolefin-based material to the total thickness of the films and adhesives is calculated as a monomaterial ratio, the monomaterial ratio is preferably 70% or more. The monomaterial ratio is more preferably 80% or more, and further preferably 90% or more. By making the monomaterial ratio fall within this range, it is possible to achieve a packaging material configuration that is easy to recycle. If the monomaterial ratio is less than 70%, recycling may be difficult due to foreign matters and the like coming from different materials.

As described above, it is preferred to use a polypropylene-based resin as the polyolefin-based resin that constitutes a base film. By using the polypropylene-based resin also for the heat sealable resin layer, it is possible to make the configuration easier to recycle. If all the polyolefin-based materials are polypropylene-based resins, it is possible to make the configuration further easy to recycle.

In the packaging material of the present invention, the total thickness of the films and adhesives is preferably 20 to 140 μm, more preferably 25 to 135 μm, and further preferably 30 to 130 μm. By making the total thickness of the packaging material fall within this range, it is possible to realize a package capable of exhibiting required physical properties such as toughness and barrier performance. If the total thickness is less than 20 μm, the toughness as a bag is not sufficient, and the bag may be torn or punctured. On the other hand, if the total thickness exceeds 140 μm, the stiffness is high and the handleability may deteriorate, and the cost of the package increases. This is not desirable also from an economical aspect.

The packaging material of the present invention has excellent heat resistance, toughness, and barrier performance, and is excellent in visibility, and hence can be used as a variety of packages. As examples of the packages, sterilization treatment applications of boiling or retorting, frozen food applications, vacuum packaging applications, microwave oven heating applications, and the like can be exemplified.

The form of the package prepared with the packaging material of the present invention is not particularly limited and can take a variety of forms. Examples of the packaging form include three-side or four-side pouches, standing pouches, spout pouches, and the like.

The contents to be filled in the packaging bag using the packaging material of the present invention are not particularly limited, and the contents may be liquid, powder, and gel. The contents may be food or may be non-food.

EXAMPLES

Next, the present invention will be described in more detail by means of examples. However, the present invention is not limited to the following examples. Various evaluations were performed by the following measurement methods.

(1) Thicknesses of various films

Measurements were performed using a dial gauge in accordance with the method Ain JIS K7130-1999.

(2) Composition and film thickness of inorganic thin film layer (B)

For laminated films (after thin film lamination) obtained in Examples and Comparative Examples, a film thickness composition was measured using a fluorescent X-ray analyzer (supermini 200, manufactured by Rigaku Co., Ltd.) on the basis of a calibration curve prepared in advance. The condition of the excitation X-ray tube was 50 kV and 4.0 mA.

(3) Deposition amounts of coating layer (A), anchor coat layer (C), and protective layer (D)

In each Example and Comparative Example, using each laminated film obtained at the stage of laminating predetermined coating layer (A), anchor coat layer (C), and protective layer (D) on the base film, as a sample, a test piece of 100 mm × 100 mm was cut out from the sample, wiping of the coat layer by any of water, ethanol, or acetone was conducted, and a deposition amount was calculated from the change in mass of the film before and after the wiping.

(4) Method for evaluating appearance after processing

In each Example and Comparative Example, after laminating the coating layer (A), the inorganic thin film layer (B), the anchor coat layer (C), and the protective layer (D), the appearance of the film was visually evaluated.

Good: good without generation of defect
Bad: any of faults of wrinkles, coating unevenness, and crawling occurred

(5) Method for evaluating dimensional change rate after processing

In each Example and Comparative Example, a length A in the film width direction before laminating the coating layer (A), the inorganic thin film layer (B), the anchor coat layer (C), and the protective layer (D), and a length B in the film width direction after lamination (for example, after lamination of the protective layer when all of the anchor, the inorganic thin film layer, and the protective layer are laminated) were measured, and a value X determined according to the following formula was evaluated as a dimensional change rate after processing.

$$\text{Dimensional change rate after processing } X = (A - B)/A \times 100$$

[Preparation of packaging material]

(6) Preparation of packaging material for evaluation

When one base film was used, after applying a polyurethane-based adhesive (TM569/cat10L manufactured by Toyo-Morton, Ltd.) on a base film described in Examples and Comparative Examples so that the thickness after a drying treatment at 80°C was 3 $\mu$m, an unstretched polypropylene film, a straight-chain low density polyethylene film, or a PET sealant film that will be described later as a heat sealable resin was dry laminated on the metal roll heated to 60°C, and the resultant matter was aged at 40°C for two days (48 hours) to obtain a laminated laminate for evaluation.
On the other hand, when two base films were used, after applying a polyurethane-based adhesive (TM569/cat10L manufactured by Toyo-Morton, Ltd.) on a base film described in Examples and Comparative Examples so that the thickness after a drying treatment at 80°C was 3 $\mu$m, another base film was dry laminated on the metal roll heated to 60°C, to give a wound roll. After applying the same adhesive to the roll so that the thickness after a drying treatment at 80°C was 3 $\mu$m, an unstretched polypropylene film, a straight-chain low density polyethylene film, or a PET sealant film that will be described later as a heat sealable resin was dry laminated on the metal roll heated to 60°C, and the resultant matter was aged at 40°C for two days (48 hours) to obtain a packaging material for evaluation.

(7) Method for evaluating oxygen permeability of packaging material

For the packaging material prepared in the above (6), oxygen permeability was measured in accordance with the method B in JIS-K7126 using an oxygen permeability measuring apparatus ("OX-TRAN (registered tradename) 2/22" manufactured by MOCON, Inc.) in an atmosphere at a temperature of 23°C and a humidity of 65% RH. Measurement of oxygen permeability was carried out in a direction in which oxygen permeates from the base film side to the heat sealable resin layer side of the packaging material. Meanwhile, the packaging material prepared in the above (6) was subjected to a boiling treatment of retaining in hot water at 95°C for 30 minutes, and dried at 40°C for a day (24 hours), and for the obtained packaging material after the wet heat treatment, oxygen permeability (after boiling) was measured in the same manner as described above.

(8) Method for evaluating water vapor permeability of packaging material

For the packaging material prepared in the above (6), water vapor permeability was measured in accordance with the method B in JIS-K7129 using a water vapor permeability measuring apparatus ("PERMATRAN-W 3/33MG" manufactured by MOCON, Inc.) in an atmosphere at a temperature of 40°C and a humidity of 90% RH. Measurement of water vapor permeability was carried out in a direction in which water vapor permeates from the base film side to the heat sealable resin side of the packaging material. Meanwhile, the packaging material prepared in the above (5) was subjected to a boiling treatment of retaining in hot water at 95°C for 30 minutes, and dried at 40°C for a day (24 hours), and for the obtained packaging material after the wet heat treatment, water vapor permeability (after boiling) was measured in the same manner as described above.

(9) Method for evaluating heat seal strength of packaging material

For the packaging material prepared in the above (6), heat seal strength was measured in accordance with JIS Z1707. The specific procedure is shown below. Heat sealing surfaces of samples were adhered with a heat sealer. The heat sealing conditions included an upper bar temperature of 160°C, a lower bar temperature of 30°C, a pressure of 0.2 MPa, and a time of 2 seconds. An adhesion sample was cut out so that the seal width was 15 mm. A peel strength was measured at a tensile speed of 200 mm/min using a universal tensile tester DSS-100 (manufactured by SHIMADZU CORPORATION). The peel strength was shown in strength per 15 mm (N/15 mm). The seal appearance was relatively evaluated as follows: the one sealed without generation of wrinkles was evaluated as good, the one in which wrinkles were partially generated was evaluated as poor, and the one in which wrinkles were generated over the entire surface was evaluated as bad.

(10) Heating elongation rate (%) of base film delaminated from packaging material

For the base film delaminated from the packaging material prepared in the above (6), the heating elongation rate was measured. The heating elongation rate was determined by TMA measurement using a thermomechanical analyzer ("TMA-60" manufactured by SHIMADZU CORPORATION).
Regarding the heating elongation rate in the MD direction, a packaging material of Examples and Comparative Examples was cut out so that the width in the MD direction was 80 mm and the width in the TD direction was 30 mm, and from the base film delaminated between adhesive layers, a strip of the base film was cut out so that the width in the MD direction was 30 mm and the width in the TD direction was 4 mm to prepare a sample. Measurement conditions included a chuck distance of 10 mm, a measurement temperature range from 30°C to 150°C, a rate of temperature rise of 20°C/ min, and a tensile load applied to the sample strip of 0.39 N. From the chuck distance (mm) before temperature rise and the chuck distance (mm) when the temperature reached 130°C, a heating elongation rate was determined.
Regarding the heating elongation rate in the TD direction, a packaging material of Examples and Comparative Examples was cut out so that the width in the MD direction was 80 mm and the width in the TD direction was 30 mm, and from the base film delaminated between adhesive layers, a strip of the base film was cut out so that the width in the TD direction was 30 mm and the width in the MD direction was 4 mm to prepare a sample. Measurement conditions included a chuck distance of 10 mm, a measurement temperature range from 30°C to 150°C, a rate of temperature rise of 20°C/ min, and a tensile load applied to the sample strip of 0.39 N. From the chuck distance (mm) before temperature rise and the chuck distance (mm) when the temperature reached 130°C, a heating elongation rate was determined.
The heating elongation rate (S130) when the temperature reached 130°C was determined by the following formula.

(S130) = (chuck distance when heated to 130°C - chuck dstance before temperature rise)/chuck distance before temperature rise $\times$ 100

(11) Criteria for evaluation of monomaterialization: monomaterial ratio

Regarding the packaging material prepared in the above (6), as criteria for evaluation of monomaterialization, a ratio of the thickness of the olefin-based material to the total thickness of the films and adhesives was calculated as a monomaterial ratio.

(12) Criteria for evaluation of visibility and microwave suitability

Regarding the packaging material prepared in the above (6), as the criteria for evaluation of visibility and microwave suitability, the one in which the package is transparent, and an aluminum foil or aluminum vapor deposition was not used in the barrier layer was evaluated as good.

(13) Dimensional change rate after boiling treatment (%)

For the packaging material prepared in the above (6), a guideline of 150 mm was drawn in each of the MD direction, the TD direction, the direction inclined at an angle of -45° with respect to the MD direction (referred to as A direction), and the direction inclined at an angle of +45° with respect to the MD direction (referred to as B direction), and the packaging material was subjected to a boiling treatment of retaining in hot water at 95°C for 30 minutes, and dried at 40°C for a day (24 hours). For the obtained packaging material after the wet heat treatment, the length (mm) of the guideline was measured again, and the dimensional change before and after the treatment was determined according to the following formula.

Dimensional change rate after boiling = (Dimension after boiling treatment - 150)/150 × 100

Among the MD direction, the TD direction, the A direction, and the B direction, the highest value of dimensional change rate is shown in Table 5.

Hereinafter, the base films used in Examples and Comparative Examples are described. These were used in Examples 1 to 16, and Comparative Examples 1 to 7, and are shown in Table 5.

[Preparation of base film]

The details of the polypropylene-based resin raw materials used in the preparation of polyolefin base films OPP-1 to 7, the film-forming conditions, and the raw material blending ratio are shown in Tables 1 to 4.

[Table 1]

| Polypropylene-based resin | PP-1 | PP-2 | PP-3 | PP-4 | PP-5 | PP-6 |
|---|---|---|---|---|---|---|
| Raw material monomer | propylene | propylene | propylene | propylene, ethylene | propylene | propylene |
| Raw material type | FL203D | FS2012 | FLX80E4 | WFX4M | FL4 | F300SP |
| Stereoregularity of resin (mesopentad fraction (%)) | 94.8 | 99.2 | 98.9 | unmeasurable | 98.4 | 93.8 |
| Ethylene copolymerization amount (% by mole) | 0.0 | 0.0 | 0.0 | 3.0 | 00 | 00 |
| Molecular weight (Mw) | 310,000 | 320,000 | 240,000 | 220,000 | 300,000 | 310,000 |
| Molecular weight (Mn) | 56,000 | 81,000 | 65,000 | 80,000 | 55,000 | 59,000 |
| Molecular weight distribution (Mw/Mn) | 5.6 | 4.0 | 3.7 | 2.7 | 5.5 | 5.3 |
| MFR (g/10min, 230°C, 2.16kgf) | 2.5 | 2.2 | 7.5 | 7.0 | 5.6 | 3.2 |
| DSC melting peak temperature (°C) | 160.8 | 162.7 | 162.4 | 125.3 | 163.2 | 158.6 |
| DSC melting peak area (J/g) | 99.2 | 93.0 | 94.6 | 64.3 | 98.1 | 92.6 |

[Table 2]

| Masterbatch | A | B |
|---|---|---|
| Product name of masterbatch | EX-00706H | FTX0627G |
| Anti-blocking agent in masterbatch | silicone particles | silica particles |
| Average particle diameter of anti-blocking agent (μm) | 2.0 | 2.7 |
| Content of anti-blocking agent in masterbatch (ppm by weight) | 50,000 | 50,000 |
| MFR of polypropylene resin in masterbatch (g/10min, 230°C, 2.16kgf) | 2.5 | 2.5 |

[Table 3]

| Film formation condition | a | b | c | d | e |
|---|---|---|---|---|---|
| Temperature of melted resin (°C) | 250 | 250 | 250 | 250 | 250 |
| Temperature of cooling roll (°C) | 40 | 30 | 30 | 30 | 30 |
| Stretching ratio in machine direction (times) | 4.5 | 4.5 | 4.5 | 5.5 | 4.5 |
| Stretching temperature in machine direction (°C) | 125 | 125 | 125 | 130 | 125 |
| Stretching ratio in transverse direction (times) | 8.2 | 8.2 | 8.2 | 11.0 | 8.2 |
| Preheating temperature of stretching in transverse direction (°C) | 167 | 168 | 175 | 173 | 168 |
| Stretching temperature in transverse direction (°C) | 163 | 155 | 166 | 165 | 162 |
| Temperature of heat setting (°C) | 169 | 165 | 171 | 170 | 165 |
| Relaxation ratio in transverse direction (%) | 6.7 | 6.7 | 6.7 | 6.7 | 0 |

[Table 4]

| | | | | | OPP-1 | OPP-2 | OPP-3 | OPP-4 | OPP-5 | OPP-6 | OPP-7 |
|---|---|---|---|---|---|---|---|---|---|---|---|
| Base layer (A) | Raw material | PP-1 | % by weight | | 0.00 | 100.00 | 0.00 | 0.00 | 0.00 | 0.00 | 0.00 |
| | | PP-2 | % by weight | | 30.00 | 0.00 | 27.00 | 30.00 | 30.00 | 30.00 | 30.00 |
| | | PP-3 | % by weight | | 70.00 | 0.00 | 70.00 | 70.00 | 70.00 | 70.00 | 70.00 |
| | | PP-4 | % by weight | | 0.00 | 0.00 | 0.00 | 0.00 | 0.00 | 0.00 | 0.00 |
| | | PP-5 | % by weight | | 0.00 | 0.00 | 0.00 | 0.00 | 0.00 | 0.00 | 0.00 |
| | | PE-1 | % by weight | | 0.00 | 0.00 | 3.00 | 0.00 | 0.00 | 0.00 | 0.00 |
| | | Antistatic agent | % by weight | | 0.00 | 0.00 | 0.00 | 0.00 | 0.00 | 0.00 | 0.00 |
| | | Content of anti-blocking agent | ppm by weight | | 0 | 0 | 0 | 0 | 0.00 | 0.00 | 0.00 |
| | Thickness | | μm | | 18 | 17.7 | 17.2 | 17.7 | 21 | 18 | 18 |

(continued)

|  |  |  |  |  | OPP-1 | OPP-2 | OPP-3 | OPP-4 | OPP-5 | OPP-6 | OPP-7 |
|---|---|---|---|---|---|---|---|---|---|---|---|
| Surface layer (B) | Raw material | PP-1 | % by weight | | 0.0 | 95.2 | 0.0 | 0.0 | 0.0 | 0.0 | 0.0 |
| | | PP-2 | % by weight | | 0.0 | 0.0 | 0.0 | 0.0 | 0.0 | 0.0 | 0.0 |
| | | PP-3 | % by weight | | 0.0 | 0.0 | 0.0 | 0.0 | 0.0 | 0.0 | 0.0 |
| | | PP-4 | % by weight | | 0.0 | 0.0 | 0.0 | 0.0 | 0.0 | 0.0 | 0.0 |
| | | PP-5 | % by weight | | 24.8 | 0.0 | 0.0 | 0.0 | 0.00 | 0.00 | 0.00 |
| | | PP-6 | % by weight | | 72.2 | 0.0 | 96.0 | 96.0 | 96.4 | 96.4 | 96.4 |
| | | Masterbatch including anti-blocking agent | % by weight | | 3.0 | 4.8 | 4.0 | 4.0 | 3.6 | 3.6 | 3.6 |
| | | Masterbatch type | - | | A | B | A | A | A | A | A |
| | Thickness | | μm | | 1.0 | 1.3 | 1.0 | 1.0 | 20 | 1.0 | 1.0 |
| | Surface treatment | | | | corona treatment | corona treatment | corona treatment | corona treatment | corona treatment | corona treatment | corona treatment |
| Surface layer (C) | Raw material | PP-1 | % by weight | | 0.0 | 93.6 | 0.0 | 0.0 | 0.0 | 0.0 | 0.0 |
| | | PP-2 | % by weight | | 0.0 | 0.0 | 0.0 | 0.0 | 0.0 | 0.0 | 0.0 |
| | | PP-3 | % by weight | | 0.0 | 0.0 | 0.0 | 0.0 | 0.0 | 0.0 | 0.0 |
| | | PP-4 | % by weight | | 0.0 | 0.0 | 52.0 | 52.0 | 0.0 | 0.0 | 0.0 |
| | | PP-5 | % by weight | | 24.8 | 0.0 | 0.0 | 0.0 | 0.00 | 0.00 | 0.00 |
| | | PP-6 | % by weight | | 72.2 | 0.0 | 45.0 | 45.0 | 94.0 | 94.0 | 94.0 |
| | | Masterbatch including anti-blocking agent | % by weight | | 3.0 | 6.4 | 3.0 | 3.0 | 6.0 | 6.0 | 6.0 |
| | | Masterbatch type | - | | A | B | A | A | A | A | A |
| | Thickness | | μm | | 1.0 | 1.0 | 1.8 | 1.3 | 20 | 1.0 | 1.0 |
| | Surface treatment | | | | no treatment | no treatment | corona treatment | corona treatment | no treatment | no treatment | no treatment |
| Film formation condition (See Table 3) | | | | | a | b | a | a | b | d | e |

22

(OPP-1)

For the base layer (A), 30.0% by weight of a polypropylene homopolymer PP-2 shown in Table 1, and 70.0% by weight of a polypropylene homopolymer PP-3 shown in Table 1 were used.

For the surface layer (B), one containing 96.4% by weight of the polypropylene homopolymer PP-3 shown in Table 1 and 3.6% by weight of a masterbatch A shown in Table 2 was used.

For the surface layer (C), one containing 94.0% by weight of the polypropylene homopolymer PP-3 shown in Table 1 and 6.0% by weight of the masterbatch A shown in Table 2 was used.

Using a 45 mmcp extruder for the base layer (A), a 25 mmcp extruder for the surface layer (B), and a 20 mmφ extruder for the surface layer (C), respective raw resins were melted at 250°C, co-extruded into a sheet from a T-die, solidified by cooling such that the surface layer (B) came into contact with a cooling roll at 30°C, and then stretched 4.5 times in the machine direction (MD) at 125°C. Next, in a tenter, both ends of the film in the transverse direction (TD) were held with clips, and after preheating at 173°C, the film was stretched 8.2 times in the transverse direction (TD) at 164°C, and heat setting was performed at 171°C while the film was being relaxed by 6.7% in the transverse direction (TD). The film formation condition at this time is called a film formation condition a. The details of the present film formation condition are shown in Table 3.

In this way, a biaxially oriented polypropylene-based film having a configuration of surface layer (B)/base layer (A)/surface layer (C) was obtained.

The surface of the surface layer (B) of the biaxially oriented polypropylene-based film was subjected to a corona treatment using a corona treatment machine manufactured by Softal Corona & Plasma GmbH under a condition of applied current value: 0.75A, and then the film was wound up with a winder. The thickness of the obtained film was 20 μm (the thicknesses of surface layer (B)/base layer (A)/surface layer (C) were 1.0 μm/18.0 μm/1.0 μm). The details of the present configuration are shown in Table 4.

(OPP-2)

For the base layer (A), the polypropylene homopolymer PP-1 shown in Table 1 was used.

For the surface layer (B), one containing 96.4% by weight of the polypropylene homopolymer PP-3 shown in Table 1 and 3.6% by weight of a masterbatch A shown in Table 2 was used.

For the surface layer (C), one containing 94.0% by weight of the polypropylene homopolymer PP-3 shown in Table 1 and 6.0% by weight of the masterbatch A shown in Table 2 was used.

Using a 45 mmφ extruder for the base layer (A), a 25 mmcp extruder for the surface layer (B), and a 20 mmφ extruder for the surface layer (C), respective raw resins were melted at 250°C, co-extruded into a sheet from a T-die, solidified by cooling such that the surface layer (B) came into contact with a cooling roll at 30°C, and then stretched 4.5 times in the machine direction (MD) at 135°C. Next, in a tenter, both ends of the film in the transverse direction (TD) were held with clips, and after preheating at 168°C, the film was stretched 8.2 times in the transverse direction (TD) at 155°C, and heat setting was performed at 165°C while the film was being relaxed by 6.7% in the transverse direction (TD). The film formation condition at this time is called a film formation condition b. The details of the present film formation condition are shown in Table 3.

In this way, a biaxially oriented polypropylene-based film having a configuration of surface layer (B)/base layer (A)/surface layer (C) was obtained.

The surface of the surface layer (B) of the biaxially oriented polypropylene-based film was subjected to a corona treatment using a corona treatment machine manufactured by Softal Corona & Plasma GmbH under a condition of applied current value: 0.75A, and then the film was wound up with a winder. The thickness of the obtained film was 20 μm (the thicknesses of surface layer (B)/base layer (A)/surface layer (C) were 1.0 μm/18.0 μm/1.0 μm). The details of the present configuration are shown in Table 4.

(OPP-3)

For the base layer (A), a mixture of 27.0% by weight of the polypropylene homopolymer PP-2 shown in Table 1, 70.0% by weight of the polypropylene homopolymer PP-3 shown in Table 1, and 3% by weight of [PE-1: ethylene homopolymer, "SLH218" manufactured by Braskem, MFR: 2.3 g/10min, melting point: 126°C, bio-based degree: 84%, density: 0.916 g/cm3] was used.

For the surface layer (B), one containing 96.4% by weight of the polypropylene homopolymer PP-3 shown in Table 1 and 3.6% by weight of a masterbatch A shown in Table 2 was used.

For the surface layer (C), one containing 94.0% by weight of the polypropylene homopolymer PP-3 shown in Table 1 and 6.0% by weight of the masterbatch A shown in Table 2 was used.

Using a 45 mmcp extruder for the base layer (A), a 25 mmcp extruder for the surface layer (B), and a 20 mmφ

extruder for the surface layer (C), respective raw resins were melted at 250°C, co-extruded into a sheet from a T-die, solidified by cooling such that the surface layer (B) came into contact with a cooling roll at 30°C, and then stretched 4.5 times in the machine direction (MD) at 125°C. Next, in a tenter, both ends of the film in the transverse direction (TD) were held with clips, and after preheating at 173°C, the film was stretched 8.2 times in the transverse direction (TD) at 164°C, and heat setting was performed at 171°C while the film was being relaxed by 6.7% in the transverse direction (TD). The film formation condition at this time is called a film formation condition a. The details of the present film formation condition are shown in Table 3.

In this way, a biaxially oriented polypropylene-based film having a configuration of surface layer (B)/base layer (A)/surface layer (C) was obtained.

The surface of the surface layer (B) of the biaxially oriented polypropylene-based film was subjected to a corona treatment using a corona treatment machine manufactured by Softal Corona & Plasma GmbH under a condition of applied current value: 0.75A, and then the film was wound up with a winder. The thickness of the obtained film was 20 μm (the thicknesses of surface layer (B)/base layer (A)/surface layer (C) were 1.0 μm/18.0 μm/1.0 μm). The details of the present configuration are shown in Table 4.

(OPP-4)

For the base layer (A), a mixture of 30.0% by weight of the polypropylene homopolymer PP-2 shown in Table 1, and 70.0% by weight of the polypropylene homopolymer PP-3 shown in Table 1 was used.

For the surface layer (B), one containing 45.0% by weight of the polypropylene homopolymer PP-3 shown in Table 1, 52.0% by weight of the propylene-ethylene copolymer shown in Table 1, and 3.0% by weight of a masterbatch B shown in Table 2 was used.

For the surface layer (C), one containing 96.0% by weight of the polypropylene homopolymer PP-3 shown in Table 1 and 4.0% by weight of the masterbatch B shown in Table 2 was used.

Using a 45 mmcp extruder for the base layer (A), a 25 mmcp extruder for the surface layer (B), and a 20 mmφ extruder for the surface layer (C), respective raw resins were melted at 250°C, co-extruded into a sheet from a T-die, solidified by cooling such that the surface layer (B) came into contact with a cooling roll at 40°C, and then stretched 4.5 times in the machine direction (MD) at 125°C. Next, in a tenter, both ends of the film in the transverse direction (TD) were held with clips, and after preheating at 167°C, the film was stretched 8.2 times in the transverse direction (TD) at 163°C, and heat setting was performed at 169°C while the film was being relaxed by 6.7% in the transverse direction (TD). The film formation condition at this time is called a film formation condition a. The details of the present film formation condition are shown in Table 3.

In this way, a biaxially oriented polypropylene-based film having a configuration of surface layer (B)/base layer (A)/surface layer (C) was obtained.

The surface of the surface layer (B) of the biaxially oriented polypropylene-based film was subjected to a corona treatment using a corona treatment machine manufactured by Softal Corona & Plasma GmbH under a condition of applied current value: 0.75A, and then the film was wound up with a winder. The thickness of the obtained film was 20 μm (the thicknesses of surface layer (B)/base layer (A)/surface layer (C) were 1.3 μm/17.7 μm/1.0 μm). The details of the present configuration are shown in Table 4.

(OPP-5)

A biaxially oriented polypropylene-based film having a configuration of surface layer (B)/base layer (A)/surface layer (C) was obtained in the same manner as in (OPP-1) except that after extruding the base layer (A) in a sheet-like single layer by a 45 mmφ extruder, the surface layer (B) was extruded by a 25 mmcp extruder, and the surface layer (C) was extruded by a 20 mmφ extruder to achieve lamination. The thickness of the obtained film was 20 μm (the thicknesses of surface layer (B)/base layer (A)/ surface layer (C) were 2.0 μm/21.0 μm/2.0 μm). The details of the present configuration are shown in Table 4.

(OPP-6)

A biaxially oriented polypropylene-based film having a configuration of surface layer (B)/base layer (A)/surface layer (C) was obtained in the same manner as in (OPP-1) except that the stretching condition was changed to a condition d described in Table 3. The thickness of the obtained film was 20 μm (the thicknesses of surface layer (B)/base layer (A)/ surface layer (C) were 2.0 μm/21.0 μm/2.0 μm). The details of the present configuration are shown in Table 4.

(OPP-7)

A biaxially oriented polypropylene-based film having a configuration of surface layer (B)/base layer (A)/surface layer (C) was obtained in the same manner as in (OPP-1) except that the stretching condition was changed to a condition e described in Table 3. The thickness of the obtained film was 20 μm (the thicknesses of surface layer (B)/base layer (A)/ surface layer (C) were 2.0 μm/21.0 μm/2.0 μm). The details of the present configuration are shown in Table 4.

(Other base films)

(PET) Biaxially stretched polyester film (E5100-12 μm manufactured by TOYOBO)
(NY) Biaxially stretched polyamide film (N1100-15 μm manufactured by TOYOBO)
(Vapor-deposited PET) 12 μm thick transparent vapor-deposited polyester film ("VE707" manufactured by TOYOBO)

(Coating layer (A))

Hereinafter, the details of the coating liquid for forming a coating layer (A) used in Examples and Comparative Examples are described. These were used in Examples 1 to 16, and Comparative Examples 1 to 7, and are shown in Table 5.

[Polyvinyl alcohol resin (a)]

To 90 parts by mass of purified water, 10 parts by mass of a fully saponified polyvinyl alcohol resin (product name: G Polymer OKS8049Q (degree of saponification: 99.0% or more, average degree of polymerization: 450) manufactured by The Nippon Synthetic Chemical Industry Co., Ltd.) was added, and the mixture was heated to 80°C under stirring and then stirred for about 1 hour. Thereafter, the mixture was cooled to room temperature, thereby obtaining an almost transparent polyvinyl alcohol solution (PVA solution) having a solid content of 10%.

[Inorganic layered compound dispersion (b)]

To 95 parts by mass of purified water, 5 parts by mass of montmorillonite (product name: KUNIPIA F, manufactured by KUNIMINE INDUSTRIES CO., LTD.), which is an inorganic layered compound, was added under stirring, and sufficiently dispersed using a homogenizer at a setting of 1500 rpm. Thereafter, the temperature was kept at 23°C for a day to obtain an inorganic layered compound dispersion having a solid content of 5%.

[Coating liquid 1 for use in coating layer 1]

Materials were mixed at the following blending ratio to prepare a coating liquid (resin composition for coating layer).

| | |
|---|---|
| Ion exchange water | 15.00% by mass |
| Isopropyl alcohol | 15.00% by mass |
| Polyvinyl alcohol resin (a) | 30.00% by mass |
| Inorganic layered compound dispersion (b) | 40.00% by mass |

[Coating liquid 2 for use in coating layer 2]

Materials were mixed at the following blending ratio to prepare a coating liquid (resin composition for coating layer).

| | |
|---|---|
| Ion exchange water | 15.00% by mass |
| Isopropyl alcohol | 15.00% by mass |
| Polyvinyl alcohol resin (a) | 70.00% by mass |

[Coating liquid 3 for use in coating layer 3]

The following materials were mixed in the mass ratio shown below, and dissolved by stirring for 30 minutes or more. Next, undissolved substances were removed by using a filter having a nominal filtration accuracy of 50 $\mu$m to prepare a coating liquid (resin composition for coating layer).

| | |
|---|---|
| Ion exchange water | 37.50% by mass |
| Polyvinylidene chloride resin (c) | 62.50% by mass |

(Saran Latex L557 manufactured by Asahi Kasei Chemicals, solids percentage of 48%)

(Coating of film with coating liquid (lamination of coating layer))

The coating liquid prepared above was applied by a gravure roll coating method on the corona-treated surface of the base film, and after pre-drying at 90°C for 4 seconds, main-drying at 120°C for 4 seconds was performed to obtain a coating layer. The deposition amount of the coating layer at this time was 0.30 g/m$^2$. Thereafter, a post-heat treatment was performed at 40°C for two days (48 hours). In this manner, a laminated film having any of the coating layers 1 to 3 was prepared.

(Inorganic thin film layer (B))

Hereinafter, a method for preparing an inorganic thin film layer (A) for use in each of Examples and Comparative Examples is shown. These were used in Examples 1 to 16, and Comparative Examples 1 to 7, and are shown in Table 5.

(Formation of inorganic thin film layer 1)

As an inorganic thin film layer 1, a composite oxide layer of silicon dioxide and aluminum oxide was formed on the anchor coat layer by electron beam vapor deposition. Particulate $SiO_2$ (purity 99.9%) and $Al_2O_3$ (purity 99.9%) of about 3 mm to 5 mm were used as vapor deposition sources. The film thickness of the inorganic thin film layer ($SiO_2/Al_2O_3$ composite oxide layer) in the film thus obtained (film containing inorganic thin film layer/organic resin layer) was 13 nm. The composition of the composite oxide layer was $SiO_2/Al_2O_3$ (mass ratio) = 70/30.

(Formation of inorganic thin film layer 2)

As an inorganic thin film layer 2, silicon oxide was vapor-deposited on the anchor coat layer. Using a small-sized vacuum vapor deposition device (VWR-400/ERH manufactured by ULVAC KIKO, Inc.), after reducing the pressure to 10$^{-3}$ Pa or less, silicon oxide was set to a vapor deposition source B-110 manufactured by The Nilaco Corporation from below the substrate, and heated to evaporate, and thus a silicon oxide film having a thickness of 30 nm was formed on the film.

(Formation of inorganic thin film layer 3)

As an inorganic thin film layer 3, metal aluminum was vapor-deposited on the anchor coat layer. Using a small-sized vacuum vapor deposition device (VWR-400/ERH manufactured by ULVAC KIKO, Inc.), after reducing the pressure to 10$^{-3}$ Pa or less, aluminum foil with a purity of 99.9% was set to a vapor deposition source CF-305W manufactured by The Nilaco Corporation from below the substrate, and the metal aluminum was heated to evaporate, and thus a metal aluminum film having a thickness of 30 nm was formed on the film.

(Anchor coat layer (C))

Hereinafter, a method for preparing an anchor coat layer (C) used in each of Examples and Comparative Examples is shown.

[Polyester resin (a)]

As a polyester component, polyester polyol ("DF-COAT GEC-004C" manufactured by DIC Corporation: solids percentage of 30%) was used.

[Polyisocyanate crosslinking agent (b)]

As a polyisocyanate component, a trimethylol propane adduct of metaxylylene diisocyanate ("TAKENATE D-110N" manufactured by Mitsui Chemicals, Inc.: solids percentage of 75%) was used.

[Silane coupling agent (c)]

As a silane coupling agent, N-2-(aminoethyl)-3-aminopropyltrimethoxysilane ("KBM-603" manufactured by Shin-Etsu Chemical Co., Ltd.) was used.

[Urethane resin (d)]

As a urethane resin, a dispersion of a polyester urethane resin ("Hydran (registered trademark) AP-201" manufactured by DIC Corporation; solids percentage of 23%) was used.

[Urethane resin (e)]

As a urethane resin, a dispersion of a polyester urethane resin ("TAKELAC (registered trademark) WPB531" manufactured by Mitsui Chemicals, Inc.; solids percentage of 30%) was used.

[Coating liquid 1 for anchor coat layer 1]

A solution (15% by mass) obtained by dissolving the silane coupling agent (c) in acetone, and isocyanate (b) were mixed in the following ratio, and stirred for 10 minutes using a magnetic stirrer. The obtained preparation was diluted with methyl ethyl ketone and 1-methoxy-2-propanol (hereinafter PGM), and further, the polyester resin (a) was added to obtain an intended coating liquid 1. The mixing ratio is shown below.

| | |
|---|---|
| Polyester resin (a) | 10.62% by mass |
| Isocyanate (b) | 4.07% by mass |
| Silane coupling agent (c) | |
| *diluted with acetone | 1.73% by mass |
| Methyl ethyl ketone | 69.55% by mass |
| PGM | 14.03% by mass |

[Coating liquid 2 for anchor coat layer 2]

The following coating agents were mixed to prepare a coating liquid 2.

| | |
|---|---|
| Water | 43.91% by mass |
| Isopropanol | 30.00% by mass |
| Urethane resin (d) | 26.09% by mass |

[Coating liquid 3 for anchor coat layer 3]

The following coating agents were mixed to prepare a coating liquid 3.

| | |
|---|---|
| Water | 46.00% by mass |
| Isopropanol | 30.00% by mass |
| Urethane resin (e) | 24.00% by mass |

(Coating of film with coating liquid (lamination of anchor coat layer))

Using the coating liquids 1 to 3 for a coating layer, the coating liquid was applied by a gravure roll coating method on the corona-treated surface of the base film, and after pre-drying at 95°C for 4 seconds, main-drying at 115°C for 4 seconds was performed to obtain an anchor coat layer. The deposition amount of the anchor coat layer at this time was 0.40 g/m$^2$. Thereafter, a post-heat treatment was performed at 40°C for four days (96 hours) to obtain an intended laminated film.

(Protective layer (D))

Using the same coating liquid as that used in formation of the coating layer 1 described above, the coating liquid was applied on the inorganic thin film layer of the base film by a gravure roll coating method, and the resultant matter was dried in a drying oven at 120°C for 10 seconds to obtain a protective layer 1. The deposition amount of the protective layer at this time was 0.30 g/m$^2$. Thereafter, a post-heat treatment was performed at 40°C for two days (48 hours). In this manner, a laminated film having a protective layer was prepared.

In the manner as described above, a packaging material in which a coating layer, an anchor coat layer, an inorganic thin film layer, or a protective layer was provided on each film, and that further had a heat sealable resin was prepared.

In Examples and Comparative Examples, using respective film, lamination with the aforementioned adhesive was performed by a dry lamination method to produce packaging materials having the configurations shown in Table 5. As the heat sealable resin layer, any of the following was used.

(Heat sealable resin)

(CPP1) Unstretched polypropylene film with a thickness of 30 $\mu$m ("P1128" manufactured by TOYOBO CO., LTD.)
(CPP2) Unstretched polypropylene film with a thickness of 70 $\mu$m ("P1146" manufactured by TOYOBO CO., LTD.)
(LL2) Linear low density polyethylene film with a thickness of 40 $\mu$m ("L4102" manufactured by TOYOBO CO., LTD.)

Configurations of the prepared packages are shown in Table 5. For the obtained packages, various evaluations were carried out. The results are shown in Table 5.

[Table 5A]

| | Film | | | | | | | | | | | | | | | | | | | |
|---|---|---|---|---|---|---|---|---|---|---|---|---|---|---|---|---|---|---|---|---|
| | First film | | | | | | | | | | Second film | | | | | | | | | |
| | Base film | | | | Lamination configuration | | | | Processability | | Base film | | | | Lamination configuration | | | | Processability | |
| | Material | Thickness [μm] | Elongation rate of base film [%] MD | TD | Coating layer (A) | AC layer (C) | Inorganic thin film layer (B) | Protective layer (D) | Appearance after processing | Dimensional change rate after processing [%] | Material | Thickness [μm] | Elongation rate of base film [%] MD | TD | Coating layer (A) | AC layer (C) | Inorganic thin film layer (B) | Protective layer (D) | Appearance after processing | Dimensional change rate after processing [%] |
| Example 1 | OPP1 | 20 | 5.0 | 3.0 | coating 1 | - | - | - | Good | 0.14 | - | | - | - | - | - | - | - | - | - |
| Example 2 | OPP1 | 20 | 5.0 | 3.0 | - | AC-1 | vapor deposition 1 | - | Good | 0.11 | - | | - | - | - | - | - | - | - | - |
| Example 3 | OPP1 | 20 | 5.0 | 3.0 | - | AC-1 | vapor deposition 2 | - | Good | 0.12 | - | | - | - | - | - | - | - | - | - |
| Example 4 | OPP1 | 20 | 5.0 | 3.0 | - | AC-2 | vapor deposition 2 | - | Good | 0.11 | - | | - | - | - | - | - | - | - | - |
| Example 5 | OPP1 | 20 | 5.0 | 3.0 | - | AC-1 | vapor deposition 3 | - | Good | 0.11 | - | | - | - | - | - | - | - | - | - |
| Example 6 | OPP4 | 20 | 5.0 | 3.0 | - | AC-1 | vapor deposition 1 | - | Good | 0.11 | - | | - | - | - | - | - | - | - | - |
| Example 7 | OPP4 | 20 | 5.0 | 3.0 | - | AC-1 | vapor deposition 1 | - | Good | 0.11 | - | | - | - | - | - | - | - | - | - |
| Example 8 | OPP4 | 20 | 5.0 | 3.0 | - | AC-1 | vapor deposition 1 | - | Good | 0.11 | - | | - | - | - | - | - | - | - | - |
| Example 9 | OPP1 | 20 | 5.0 | 3.0 | - | - | vapor deposition 1 | protective layer 1 | Good | 0.15 | - | | - | - | - | - | - | - | - | - |
| Example 10 | OPP1 | 20 | 5.0 | 3.0 | - | - | - | - | - | - | OPP1 | 20 | 5.0 | 3.0 | coating 1 | - | - | - | Good | 0.14 |
| Example 11 | OPP1 | 20 | 5.0 | 3.0 | - | - | - | - | - | - | OPP1 | 20 | 5.0 | 3.0 | coating 2 | - | - | - | Good | 0.14 |
| Example 12 | PET | 12 | 2.0 | 0.8 | - | - | - | - | - | - | OPP1 | 20 | 5.0 | 3.0 | - | AC-1 | vapor deposition 1 | - | Good | 0.11 |
| Example 13 | OPP1 | 20 | 5.0 | 3.0 | - | AC-1 | vapor deposition 1 | - | Good | 0.11 | NY | 15 | 2.0 | 0.8 | - | - | - | - | - | - |
| Example 14 | OPP1 | 20 | 5.0 | 3.0 | - | - | - | - | - | - | OPP1 | 20 | 5.0 | 3.0 | - | AC-1 | vapor deposition 1 | - | Good | 0.11 |
| Example 15 | OPP1 | 20 | 5.0 | 3.0 | - | AC-1 | vapor deposition 1 | - | Good | 0.11 | OPP1 | 20 | 5.0 | 3.0 | - | AC-1 | vapor deposition 1 | - | Good | 0.11 |
| Example 16 | OPP3 | 20 | 5.0 | 3.0 | - | - | - | - | - | - | OPP1 | 20 | 5.0 | 3.0 | - | AC-1 | vapor deposition 1 | - | Good | 0.11 |
| Example 17 | OPP5 | 20 | 5.0 | 3.0 | - | AC-1 | vapor deposition 1 | - | - | - | - | | - | - | - | - | - | - | - | - |
| Example 18 | OPP6 | 20 | 4.0 | 2.0 | - | AC-1 | vapor deposition 1 | - | - | - | - | | - | - | - | - | - | - | - | - |
| Comparative example 1 | OPP2 | 20 | 11.0 | 4.0 | - | AC-1 | vapor deposition 1 | - | Poor | 1.68 | - | | - | - | - | - | - | - | - | - |
| Comparative example 2 | OPP2 | 20 | 11.0 | 4.0 | - | - | vapor deposition 1 | - | Poor | 1.50 | - | | - | - | - | - | - | - | - | - |
| Comparative example 3 | OPP1 | 20 | 5.0 | 3.0 | - | AC-3 | vapor deposition 3 | - | Good | 0.11 | - | | - | - | - | - | - | - | - | - |
| Comparative example 4 | OPP1 | 20 | 5.0 | 3.0 | - | - | - | - | - | - | - | | - | - | - | - | - | - | - | - |
| Comparative example 5 | OPP2 | 20 | 11.0 | 3.0 | coating 3 | - | - | - | Poor | 0.98 | - | | - | - | - | - | - | - | - | - |
| Comparative example 6 | Vapor-deposited PET | 12 | 1.0 | 0.5 | - | - | - | - | Good | 0.05 | NY | 15 | 2.0 | 0.8 | - | - | - | - | - | - |
| Comparative example 7 | OPP7 | 20 | 10.0 | 8.0 | - | - | vapor deposition 1 | - | Poor | 1.60 | - | | - | - | - | - | - | - | - | - |

29

[Table 5B]

| | Heat sealable resin layer | | The number of film used [piece] | The number of barrier layer | Total thickness of adhesive [μm] | Total thickness [μm] | OTR [ml/m²·d·MPa] | WVTR [g/m²·d] | OTR after boiling [ml/m²·d·MPa] | WVTR after boiling [g/m²·d] | Dimensional change after boiling [%] | 160°C Seal strength [N/15mm] | | Monomaterial ratio [%] | Visibility and microwave suitability | Heating elongation rate of base film when delaminated [%] | | | |
|---|---|---|---|---|---|---|---|---|---|---|---|---|---|---|---|---|---|---|---|
| | | | | | | | | | | | | | | | | First film | | Second film | |
| | Material | Thickness [μm] | | | | | | | | | | Appearance | Measured value | | | MD direction | TD direction | MD direction | TD direction |
| Example 1 | CPP1 | 30 | 1 | 1 | 3 | 53 | 30 | 3.0 | 200 | 3.0 | 0.2 | Good | 20 | 94.34 | Good | 3 | 3 | - | - |
| Example 2 | CPP1 | 30 | 1 | 1 | 3 | 53 | 25 | 1.0 | 25 | 1.5 | 0.2 | Good | 20 | 94.34 | Good | 3 | 3 | - | - |
| Example 3 | CPP1 | 30 | 1 | 1 | 3 | 53 | 25 | 0.5 | 25 | 0.5 | 0.2 | Good | 20 | 94.34 | Good | 3 | 3 | - | - |
| Example 4 | CPP1 | 30 | 1 | 1 | 3 | 53 | 40 | 2.0 | 40 | 2.2 | 0.2 | Good | 20 | 94.34 | Good | 3 | 3 | - | - |
| Example 5 | CPP1 | 30 | 1 | 1 | 3 | 53 | 25 | 1.0 | 40 | 1.5 | 0.2 | Good | 20 | 94.34 | Bad | 3 | 3 | - | - |
| Example 6 | CPP1 | 30 | 1 | 1 | 3 | 53 | 15 | 0.8 | 15 | 1.0 | 0.2 | Good | 20 | 94.34 | Good | 3 | 3 | - | - |
| Example 7 | CPP2 | 70 | 1 | 1 | 3 | 93 | 15 | 0.7 | 14 | 1.0 | 0.2 | Good | 20 | 96.77 | Good | 3 | 3 | - | - |
| Example 8 | LL1 | 40 | 1 | 1 | 3 | 63 | 15 | 0.8 | 15 | 1.0 | 0.2 | Good | 20 | 95.24 | Good | 3 | 3 | - | - |
| Example 9 | CPP1 | 30 | 1 | 1 | 3 | 53 | 1 | 1.2 | 10 | 1.5 | 0.2 | Good | 20 | 94.34 | Good | 3 | 3 | - | - |
| Example 10 | CPP1 | 30 | 2 | 1 | 6 | 76 | 20 | 2.5 | 50 | 2.5 | 0.2 | Good | 20 | 92.11 | Good | 4 | 3 | 3 | 3 |
| Example 11 | CPP1 | 30 | 2 | 1 | 6 | 76 | 10 | 4.0 | 50 | 4.0 | 0.2 | Good | 20 | 92.11 | Good | 4 | 3 | 3 | 3 |
| Example 12 | CPP1 | 30 | 2 | 1 | 6 | 68 | 30 | 1.0 | 30 | 1.0 | 0.1 | Good | 10 | 73.53 | Good | 1 | 3 | 3 | 3 |
| Example 13 | CPP1 | 30 | 2 | 1 | 6 | 71 | 30 | 1.0 | 30 | 1.0 | 0.2 | Good | 20 | 70.42 | Good | 3 | 3 | 1 | 2 |
| Example 14 | CPP1 | 30 | 2 | 1 | 6 | 76 | 25 | 1.0 | 25 | 1.0 | 0.2 | Good | 20 | 92.11 | Good | 4 | 3 | 3 | 3 |
| Example 15 | CPP1 | 30 | 2 | 2 | 6 | 76 | 5 | 0.3 | 7 | 0.6 | 0.2 | Good | 20 | 92.11 | Good | 3 | 3 | 3 | 3 |
| Example 16 | CPP1 | 30 | 2 | 1 | 6 | 76 | 25 | 1.0 | 50 | 1.5 | 0.3 | Good | 20 | 92.11 | Good | 4 | 3 | 3 | 3 |
| Example 17 | CPP1 | 30 | 1 | 1 | 3 | 53 | 25 | 1.0 | 50 | 1.5 | 0.3 | Good | 20 | 94.34 | Good | 4 | 3 | - | - |
| Example 18 | CPP1 | 30 | 1 | 1 | 3 | 53 | 25 | 1.0 | 50 | 1.5 | 0.3 | Good | 20 | 94.34 | Good | 4 | 3 | - | - |
| Comparative example 1 | CPP1 | 30 | 1 | 1 | 3 | 53 | 100 | 1.0 | 100 | 2.0 | 0.8 | Bad | 30 | 94.34 | Good | 7 | 3 | - | - |
| Comparative example 2 | CPP1 | 30 | 1 | 1 | 3 | 53 | 300 | 4.5 | 500 | 4.5 | 0.8 | Bad | 30 | 94.34 | Good | 9 | 3 | - | - |
| Comparative example 3 | CPP1 | 30 | 1 | 1 | 3 | 53 | 70 | 3.0 | 70 | 3.0 | 0.2 | Good | 20 | 94.34 | Bad | 3 | 3 | - | - |
| Comparative example 4 | CPP1 | 30 | 1 | 1 | 3 | 53 | 10000 | 5.0 | 10000 | 5.0 | 0.2 | Good | 20 | 94.34 | Good | 4 | 3 | - | - |
| Comparative example 5 | CPP1 | 30 | 1 | 1 | 3 | 53 | 55 | 3.0 | 55 | 5.0 | 0.8 | Bad | 30 | 94.34 | Good | 7 | 3 | - | - |
| Comparative example 6 | CPP1 | 30 | 2 | 1 | 6 | 63 | 3 | 0.6 | 3 | 0.8 | 0.1 | Good | 20 | 47.6 | Good | 1 | 1 | 2 | 1 |
| Comparative example 7 | CPP1 | 30 | 1 | 1 | 3 | 53 | 350 | 4.0 | 550 | 4.5 | 1.0 | Bad | 20 | 94.34 | Good | 9 | 7 | - | - |

## INDUSTRIAL APPLICABILITY

It was found through the present invention that gas barrier performance is greatly improved and heat resistance that is able to withstand processing and sealing can be ensured by making a packaging material in which a certain barrier layer tailored for required performance is laminated on a polyolefin-based base film, and that finally laminating a sealant composed of an olefin-based component contributes to monomaterialization while maintaining high sealability. Moreover, since the packaging material of the present invention can be easily produced by a fewer number of processing steps, it is excellent both economically and in production stability, and it is possible to provide a gas barrier package having uniform characteristics.

## Claims

1.  A packaging material comprising:

    at least one base film including a polyolefin-based resin as a main component; and
    a heat sealable resin layer, wherein
    at least one of the base film is a laminated base film having a gas barrier layer,
    at least one of the base film delaminated from the packaging material has a heating elongation rate at 130°C, measured with a thermomechanical analyzer, of 6% or less both in an MD direction and a TD direction, and
    the packaging material has an oxygen permeability of 60 ml/m²·d·MPa or less in an environment of 23°C and 65% RH.

2.  The packaging material according to claim 1, wherein the heat sealable resin layer is made of a polyolefin-based resin mainly composed of a polypropylene resin or a polyethylene resin.

3.  The packaging material according to claim 1 or 2, wherein two or more layers of the gas barrier layer are included.

4.  The packaging material according to any one of claims 1 to 3, wherein the gas barrier layer is an inorganic thin film layer including at least one of aluminum, aluminum oxide, silicon oxide, and a composite oxide of silicon oxide and aluminum oxide.

5.  The packaging material according to any one of claims 1 to 4, wherein the gas barrier layer is a coating layer including at least one of a polyvinyl alcohol resin, a polyester resin, and a polyurethane resin.

6.  The packaging material according to any one of claims 1 to 5, wherein an anchor coat layer is laminated between the base film and the gas barrier layer.

7. The packaging material according to any one of claims 1 to 6, wherein a protective layer is laminated on the gas barrier layer.

8. The packaging material according to any one of claims 1 to 7, wherein two or more sheets of the base film are included.

9. The packaging material according to any one of claims 1 to 8, wherein the polyolefin resin constituting the base film contains 1% by weight or more and 25% by weight or less of a plant-derived polyethylene resin.

10. The packaging material according to any one of claims 1 to 9, used for boiling or retorting.

11. The packaging material according to any one of claims 1 to 9, used for microwave heating.

12. A packaging bag comprising the packaging material according to any one of claims 1 to 9.

13. A package of an object to be packed comprising the packaging material according to any one of claims 1 to 9, or the packaging bag according to claim 12.

## INTERNATIONAL SEARCH REPORT

International application No.

**PCT/JP2022/046838**

| A. | CLASSIFICATION OF SUBJECT MATTER |
|---|---|

*B32B 27/32*(2006.01)i; *B65D 65/40*(2006.01)i
FI: B32B27/32 Z; B65D65/40 D

According to International Patent Classification (IPC) or to both national classification and IPC

| B. | FIELDS SEARCHED |
|---|---|

Minimum documentation searched (classification system followed by classification symbols)

B32B1/00-43/00; B65D65/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 10-329262 A (TORAY IND., INC.) 15 December 1998 (1998-12-15) | 1-4, 6-13 |
| A | claims, paragraphs [0016]-[0049], examples | 5 |
| Y | WO 2021/210466 A1 (TOYOBO CO., LTD.) 21 October 2021 (2021-10-21) | 1-4, 6-13 |
| A | claims, paragraphs [0054]-[0058], [0072], examples | 5 |
| Y | JP 2007-537058 A (CRYOVAC, INC.) 20 December 2007 (2007-12-20) | 2-4, 6-13 |
| A | claims | 5 |
| Y | JP 2014-069456 A (DAINIPPON PRINTING CO., LTD.) 21 April 2014 (2014-04-21) | 9-13 |
| | paragraph [0002] | |
| E, X | JP 2023-13250 A (TOYOBO CO., LTD.) 26 January 2023 (2023-01-26) | 1-4, 6-13 |
| E, A | paragraphs [0001], [0012]-[0063], examples | 5 |

☐ Further documents are listed in the continuation of Box C.    ☑ See patent family annex.

| | |
|---|---|
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **31 January 2023** | **07 March 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2022/046838**

| Patent document cited in search report | | | Publication date (day/month/year) | Patent family member(s) | | | Publication date (day/month/year) |
|---|---|---|---|---|---|---|---|
| JP | 10-329262 | A | 15 December 1998 | US claims, column 3, line 21 to column 5, line 17, examples | 6106933 | A | |
| WO | 2021/210466 | A1 | 21 October 2021 | TW | 202146236 | A | |
| JP | 2007-537058 | A | 20 December 2007 | US claims | 2005/0244665 | A1 | |
| | | | | WO | 2005/107502 | A1 | |
| | | | | EP | 1746905 | A1 | |
| | | | | NZ | 550735 | A | |
| | | | | AU | 2005239990 | A | |
| JP | 2014-069456 | A | 21 April 2014 | (Family: none) | | | |
| JP | 2023-13250 | A | 26 January 2023 | (Family: none) | | | |

Form PCT/ISA/210 (patent family annex) (January 2015)

**EP 4 458 579 A1**

REFERENCES CITED IN THE DESCRIPTION

**Patent documents cited in the description**

- JP 2017165059 A
- JP 2000052501 A
- JP H4359033 A
- JP 2003231221 A
- WO 2017221781 A
- JP 3318479 B